# EUROPEAN PATENT APPLICATION

(11) **EP 4 637 228 A1**
(43) Date of publication of application: **22.10.2025**
(21) Application number: 25169750.4
(22) Date of filing: 10.04.2025
(51) Int. Cl.: H04W 56/00

(54) **AUTONOMOUS TIMING ADVANCE ESTIMATION IN IDLE MODE FOR 6G UES**

(30) Priority: 18.04.2024 IN 202441031181
(71) Applicant: Nokia Technologies Oy, 02610 Espoo (FI)
(72) Inventor: MANGLANI, Girish Parmanand, 560045 Bangalore (IN)
(74) Representative: Script Intellectual Property LLP

(57) **Abstract**

An apparatus including at least one processor; and at least one memory storing instructions that, when executed with the at least one processor, cause the apparatus to perform: determining information regarding physical layer signals to be transmitted from a user equipment; receiving, by the apparatus, the physical layer signals transmitted from the user equipment; and determining by the apparatus, based upon the determined information and the receipt of the physical layer signals, a timing advance for the apparatus to use for sending signals to a network equipment.

## Description

### TECHNICAL FIELD

The example and non-limiting embodiments relate generally to timing advance estimation and, more particularly, to a timing advance for a user equipment in an idle mode.

### BRIEF DESCRIPTION OF PRIOR DEVELOPMENTS

Estimating a timing advance for a user equipment to use for communication with a base station is generally known.

### SUMMARY OF THE INVENTION

The following summary is merely intended to be an example. The summary is not intended to limit the scope of the claims.

In accordance with one aspect, an example apparatus is provided comprising: at least one processor; and at least one memory storing instructions that, when executed with the at least one processor, cause the apparatus to perform: determining information regarding physical layer signals to be transmitted from a user equipment; receiving, by the apparatus, the physical layer signals transmitted from the user equipment; and determining by the apparatus, based upon the determined information and the receipt of the physical layer signals, a timing advance for the apparatus to use for sending signals to a network equipment.

In accordance with another aspect, an example method is provided comprising: determining, by an apparatus, information regarding physical layer signals to be transmitted from a user equipment; receiving, by the apparatus, the physical layer signals transmitted from the user equipment; and determining by the apparatus, based upon the determined information and the receipt of the physical layer signals, a timing advance for the apparatus to use for sending signals to a network equipment.

In accordance with another aspect, an example apparatus is provided comprising: means for determining information regarding physical layer signals to be transmitted from a user equipment; means for receiving the physical layer signals transmitted from the user equipment; and means for determining, based upon the determined information and the receipt of the physical layer signals, a timing advance for the apparatus to use for sending signals to a network equipment.

In accordance with another aspect, an example is provided with a program storage device readable by an apparatus, tangibly embodying a program of instructions executable with the apparatus for performing operations, the operations comprising: determining information regarding physical layer signals to be transmitted from a user equipment; receiving the physical layer signals transmitted from the user equipment; and determining, based upon the determined information and the receipt of the physical layer signals, a timing advance for the apparatus to use for sending signals to a network equipment.

In accordance with another aspect, an example apparatus is provided comprising: at least one processor; and at least one memory storing instructions that, when executed with the at least one processor, cause the apparatus to perform: determining information related to physical layer signals to be received by the apparatus, where the physical layer signals are to be sent from a first user equipment to the apparatus; and transmitting the information by the apparatus to a second user equipment, where the information is at least partially configured for the second user equipment to use for demodulating the physical layer signals sent from the first user equipment and received at the second user equipment.

In accordance with another aspect, an example method is provided comprising: determining information related to physical layer signals to be received by an apparatus, where the physical layer signals are to be sent from a first user equipment to the apparatus; and transmitting the information by the apparatus to a second user equipment, where the information is at least partially configured for the second user equipment to use for demodulating the physical layer signals sent from the first user equipment and received at the second user equipment.

In accordance with another aspect, an example apparatus is provided comprising: means for determining information related to physical layer signals to be received by the apparatus, where the physical layer signals are to be sent from a first user equipment to the apparatus; and means for transmitting the information by the apparatus to a second user equipment, where the information is at least partially configured for the second user equipment to use for demodulating the physical layer signals sent from the first user equipment and received at the second user equipment.

In accordance with another aspect, an example is provided with a program storage device readable by an apparatus, tangibly embodying a program of instructions executable with the apparatus for performing operations, the operations comprising: determining information related to physical layer signals to be received by the apparatus, where the physical layer signals are to be sent from a first user equipment to the apparatus; and transmitting the information by the apparatus to a second user equipment, where the information is at least partially configured for the second user equipment to use for demodulating the physical layer signals sent from the first user equipment and received at the second user equipment.

In accordance with another aspect, an example apparatus is provided comprising: at least one processor; and at least one memory storing instructions that, when executed with the at least one processor, cause the apparatus to perform: receiving physical layer signals from a plurality of user equipment; determining respective timing advance measurements based, at least partially, on the received physical layer signals; and selecting, based at least partially on one or more parameters, at least one of the respective timing advance measurements to use for determining a timing advance for the apparatus to use for sending signals to a network equipment.

In accordance with another aspect, an example method is provided comprising: receiving physical layer signals from a plurality of user equipment; determining respective timing advance measurements based, at least partially, on the received physical layer signals; and selecting, based at least partially on one or more parameters, at least one of the respective timing advance measurements to use for determining a timing advance to use for sending signals to a network equipment.

In accordance with another aspect, an example apparatus is provided comprising: means for receiving physical layer signals from a plurality of user equipment; means for determining respective timing advance measurements based, at least partially, on the received physical layer signals; and means for selecting, based at least partially on one or more parameters, at least one of the respective timing advance measurements to use for determining a timing advance to use for sending signals to a network equipment.

In accordance with another aspect, an example is provided with a program storage device readable by an apparatus, tangibly embodying a program of instructions executable with the apparatus for performing operations, the operations comprising: receiving physical layer signals from a plurality of user equipment; determining respective timing advance measurements based, at least partially, on the received physical layer signals; and selecting, based at least partially on one or more parameters, at least one of the respective timing advance measurements to use for determining a timing advance to use for sending signals to a network equipment.

In accordance with another aspect, an example apparatus is provided comprising: at least one processor; and at least one memory storing instructions that, when executed with the at least one processor, cause the apparatus to perform: determining a first timing advance mode for sending signals from the apparatus to a network equipment; determining a second timing advance mode for sending signals from the apparatus to the network equipment; and switching between the first timing advance mode and the second timing advance mode based at least partially on a physical layer signal from one or more user equipment.

In accordance with another aspect, an example method is provided comprising: determining a first timing advance mode for sending signals from an apparatus to a network equipment; determining a second timing advance mode for sending signals from the apparatus to the network equipment; and switching between the first timing advance mode and the second timing advance mode based at least partially on a physical layer signal from one or more user equipment.

In accordance with another aspect, an example apparatus is provided comprising: means for determining a first timing advance mode for sending signals from the apparatus to a network equipment; means for determining a second timing advance mode for sending signals from the apparatus to the network equipment; and means for switching between the first timing advance mode and the second timing advance mode based at least partially on a physical layer signal from one or more user equipment.

In accordance with another aspect, an example is provided with a program storage device readable by an apparatus, tangibly embodying a program of instructions executable with the apparatus for performing operations, the operations comprising: determining a first timing advance mode for sending signals from the apparatus to a network equipment; determining a second timing advance mode for sending signals from the apparatus to the network equipment; and switching between the first timing advance mode and the second timing advance mode based at least partially on a physical layer signal from one or more user equipment.

According to some aspects, there is provided the subject matter of the independent claims. Some further aspects are provided in subject matter of the dependent claims.

### BRIEF DESCRIPTION OF DRAWINGS

The foregoing aspects and other features are explained in the following description, taken in connection with the accompanying drawings, wherein:
FIG. 1 is a block diagram of one possible and non-limiting example system in which the example embodiments may be practiced;
Fig. 2A is a diagram illustrating a 4-Step contention-based random access procedure;
Fig. 2B is a diagram illustrating a 2-Step RACH procedure;
Fig. 3 is a diagram illustrating a NR RRC state machine with RRC state transitions;
Fig. 4 is a diagram illustrating an example of beams from a network equipment and relative locations of user equipment;
Fig. 5 is a timing diagram corresponding to the user equipment locations shown in Fig. 4;
Fig. 6 is a diagram illustrating an example of beams from a network equipment and relative locations of user equipment;
Fig. 7 is a timing diagram corresponding to the user equipment locations shown in Fig. 6;
Fig. 8 is a diagram illustrating an example of a beam from a network equipment and relative locations of user equipment;
Fig. 9 is a diagram illustrating an example of beams directed towards a user equipment;
Fig. 10 is a diagram illustrating an example of beams from a network equipment and relative locations of user equipment;
Fig. 11 is a diagram illustrating an example signaling flow;
Fig. 12 is a diagram illustrating an example method;
Fig. 13 is a diagram illustrating an example method;
Fig. 14 is a diagram illustrating an example method;
Fig. 15 is a diagram illustrating an example method;
Fig. 16 is a diagram illustrating an example method.

### DETAILED DESCRIPTION

The following abbreviations that may be found in the specification and/or the drawing figures are defined as follows:
- 3GPP: third generation partnership project
- 5G: fifth generation
- 5GC: 5G core network
- 6G: sixth generation
- AMF: access and mobility management function
- BTS: base transceiver station
- CP: cyclic prefix
- CU: central unit
- D2D: device to device
- DCI: downlink control information
- DL: downlink
- DMRS: demodulation reference signal
- DU: distributed unit
- eNB (or eNodeB): evolved Node B (e.g., an LTE base station)
- EN-DC: E-UTRA-NR dual connectivity
- en-gNB or En-gNB: node providing NR user plane and control plane protocol terminations towards the UE, and acting as secondary node in EN-DC
- E-UTRA: evolved universal terrestrial radio access, i.e., the LTE radio access technology
- FDD: frequency division duplex
- gNB (or gNodeB): next generation eNB
- GP: guard period
- I/F: interface
- ICI: inter sub-carrier interference
- ISI: inter symbol interference
- LTE: long term evolution
- MAC: medium access control
- ML: machine learning
- MME: mobility management entity
- MSC: message sequence chart
- Ncs: cyclic shift parameter
- ng or NG: next generation
- ng-eNB or NG-eNB: next generation eNB
- NR: new radio
- N/W or NW: network
- OFDMA: orthogonal frequency division multiple access
- OTDOA: observed time difference of arrival
- PD: propagation delay
- PDCCH: physical downlink control channel
- PDCP: packet data convergence protocol
- PHY: physical layer
- PRACH: physical random access channel
- PUCCH: physical uplink control channel
- RACH: random access channel
- RAN: radio access network
- RAR: random access response
- Rel: release
- RIS: reconfigurable intelligent surface
- RLC: radio link control
- RRH: remote radio head
- RRC: radio resource control
- RSRP: reference signal received power
- RU: radio unit
- Rx: receiver
- SDAP: service data adaptation protocol
- SGW: serving gateway
- SIB: system information block
- SMF: session management function
- SRS: sounding reference signal
- SSB: synchronization signal block
- SS-RSRP: synchronization signal reference signal received power
- TA: timing advance
- TDD: time division duplex
- TS: technical specification
- Tx: transmitter
- UE: user equipment (e.g., a wireless, typically mobile device)
- UL: uplink
- UPF: user plane function

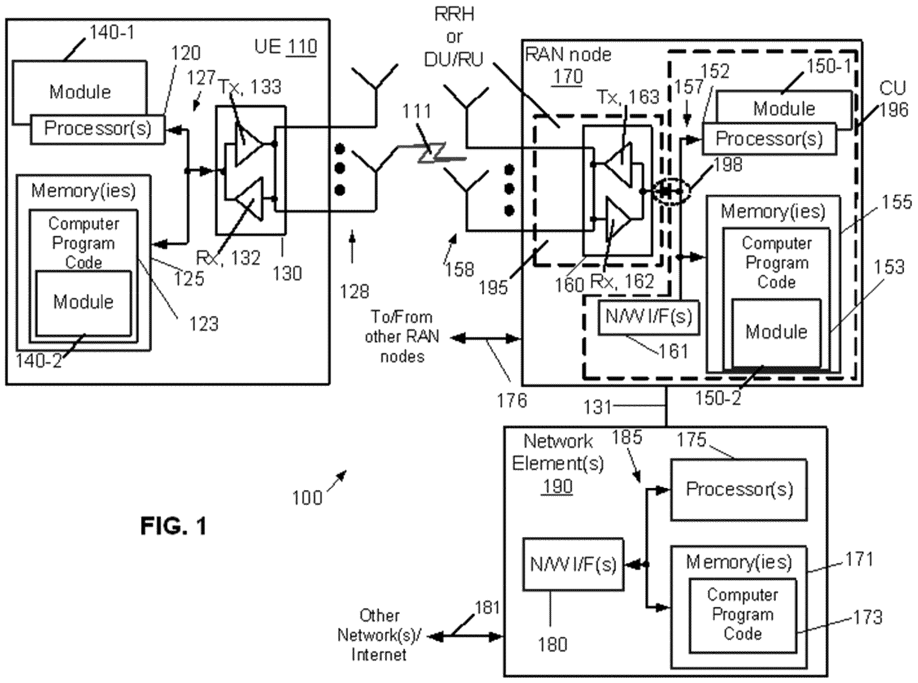

Turning to FIG. 1, this figure shows a block diagram of one possible and non-limiting example in which the examples may be practiced. A user equipment (UE) 110, radio access network (RAN) node 170, and network element(s) 190 are illustrated. Examples of network equipment, network device, or a network entity might be understood to include, at least part of, a transmission reception point or a cell or a gNB or node for example. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access by wireless devices such as the UE 110 to the wireless network 100. The RAN node 170 may be, for example, a base station for 5G, also called New Radio (NR). In 5G, the RAN node 170 may be a NG-RAN node, which is defined as either a gNB or a ng-eNB. A gNB is a node providing NR user plane and control plane protocol terminations towards the UE, and connected via the NG interface to a 5GC (such as, for example, the network element(s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(S)) and/or user plane functions (UPF(s)) and/or session management function(s) (SMF(s)). Such core network functionality for LTE may include MME (Mobility Management Entity)/SGW (Serving Gateway) functionality. These are merely exemplary functions that may be supported by the network element(s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

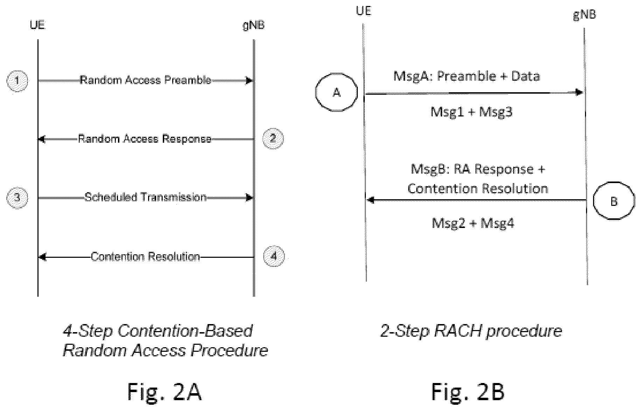

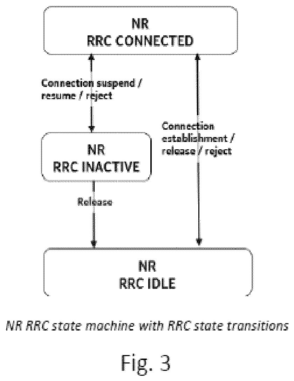

As is known in the art, Fig. 2A shows a basic procedure for 4-step contention-based random access, and Fig. 2B shows a 2-step RACH procedure. In 2-step RACH, MsgA combines the preamble signal (Msg1) and the data signal (Msg3), and MsgB combines the random access response (Msg2) and the contention resolution (Msg4). Also, as is known in the art, Fig. 3 illustrates RRC states including RRC_IDLE, RRC_CONNECTED and RRC_INACTIVE in a NR context.

In 5G Advanced Radio Access Networks (RAN), synchronization for a UE in an idle mode to a gNB uses a Synchronization Signal Block (SSB) that is transmitted in the downlink. However, due to the propagation distance between the gNB and UE, SSB reception at the UE is delayed compared to the time at the gNB. The delay is generally by d/c seconds, where d is the distance between the gNB and UE, and c is the speed of light (3x10⁸ meters/second). Similarly, a transmission from the UE to the gNB will take time, such as d/c seconds to reach the gNB. Thus, there is a time offset of about 2d/c between the transmitted gNB downlink radio frame and the received UE uplink radio frame at the gNB due to the round-trip propagation delay of the signal. The uplink of 5G Advanced networks is based on Orthogonal Frequency Division Multiple Access (OFDMA). To avoid Inter Symbol Interference (ISI) and Inter sub-Carrier Interference (ICI) in OFDMA, uplink transmissions from multiple users are received within a Cyclic Prefix (CP) duration at the gNB. Therefore, correcting for this 2d/c time offset between the downlink and uplink frames of a UE helps to avoid ISI and ICI. In 5G Advanced RAN, this offset is corrected using a Timing Advance (TA) procedure, wherein the uplink frame of a UE is advanced by 2d/c.

In 5G Advanced RAN, TA procedures are classified as either an initial timing advance procedure or a continuous timing advance procedure.

An initial timing advance is necessary before a UE in an idle mode can move to a connected mode. Initial timing advance is performed as part of a random-access procedure and advances uplink timing at the UE to correct for the propagation delay between the gNB and the UE. During the random-access procedure, Message 1 (see Fig. 2A) is sent from the UE to gNB. Based on the received timing of Message 1 (Preamble), the gNB determines the TA value and sends this to the UE using Message 2 (Random Access Response (RAR)). The UE uses the TA value from the RAR and advances its uplink transmissions. This procedure is called initial timing advance procedure. Because the gNB and UE are not time aligned when the preamble is sent, a preamble format is used which has a large Cyclic Prefix (CP) value and a large Guard Period (GP) value. In the connected mode, the UE can move around the cell and the propagation delay can change. This necessitates an update of the initial TA value. The TA at the UE is updated by the gNB using a MAC Control Element (CE) containing the TA Command and is called the continuous timing advance procedure. Features as described herein may be primarily intended to be used for the initial timing advance procedure.

As noted above, the existing initial timing advance procedure specified in 3GPP incurs signaling overhead and time-frequency resource wastage due to large CP and GP values. Various schemes have been proposed to perform TA autonomously, and thereby reduce the cost incurred due to timing advance procedures. TA estimation methods also make use of positioning methods, because once the UE position is known with respect to the gNB, TA can be estimated.

Obtaining an initial TA according in 3GPP always incurred signaling overhead costs. This signaling overhead cost increases as the number of users increases. However, signaling is necessary to estimate, and then signal, the TA value to each UE. Because the UE is not time aligned with the gNB, the preamble must include a large CP and a large GP, which incurs a cost in terms of time-frequency resources. These values are generally proportional to twice the cell radius. The time-frequency resources within the CP and GP are wasted resources. Similarly, in the case of a 2-step RACH procedure, a GP between PUSCH resources is needed due to lack of timing synchronization between gNB and UE. These are also wasted resources. Apart from the cost incurred for an initial TA estimation for idle mode UEs, signaling cost is also incurred to perform random-access and TA update when the UE loses timing synchronization with the gNB during connected mode.

Because the gNB and the UE are not time aligned when a preamble is sent, PRACH (Physical Random Access Channel) preamble planning is also impacted. Preambles based on a same root sequence are preferred due to their superior autocorrelation properties. Preambles based on the same root sequence should be separated by a cyclic shift Ncs. The value of Ncs depends on the value of zeroCorrelationZoneConfig. Because preamble transmissions are not time-aligned, Ncs is proportional to twice the cell radius. Therefore, based on this value of N_{CS}, only a few preambles can be generated from a single root sequence. More root sequences can be used to configure up to 64 preambles, but the root sequences do not have good cross-correlation properties. Moreover, use of multiple root sequences per cell makes preamble sequence planning and interference management difficult in neighboring cells.

With features as described herein, if the UE can autonomously estimate its TA and pre-compensate for the Propagation Delay (PD) before sending the preamble, time-frequency resources otherwise wasted due to the preamble's CP and GP can be reduced, initial TA signaling can be reduced or avoided, preamble sequence planning can be made simpler, and interference can be reduced.

An example method may be provided for autonomous timing advance (TA) estimation for idle mode UEs, such as with 6G for example, that are capable of receive beamforming. TA for a candidate UE may be estimated by processing SRS (sounding reference signal) signals sent by one or more reference UEs located in the same base-station beam as the candidate UE. In one example, SRS signals from at least two reference UEs are used. As used herein, a reference user equipment ("reference UE") is a UE in a connected state or mode that transmits SRS to a gNB, and whose uplink frames are time advanced so that its propagation delay to the gNB is compensated. The proposed method uses a SRS signal that is transmitted by the reference UE as a part of its usual UE-specific procedures, such as link adaptation for example. Thus, an existing SRS signal may be used by the proposed method for an additional purpose; namely, timing advance estimation for a candidate UE. The SRS transmission from the reference UE is not requested by the candidate UE from the reference UE. Nor is the SRS transmission from the reference UE requested by the gNB with the exclusive intention of enabling TA measurement at the candidate UE. Instead, the SRS signals are used for a secondary or additional purpose; a type of reuse. This additional purpose may also be referred to as an ancillary use, or a supplemental use, or an auxiliary use. Hence, the method incurs minimal signaling overhead because the SRS signals are already being generated by another UE (a reference UE), and the term "reference UE" is merely used herein as a nomenclature term to distinguish between UEs such as the candidate UE (in an idle state) and the reference UE (in a connected state). Receive beamforming capability, such as with a 6G UE for example, may be used to filter the TA measurements and provide a reliable TA estimate for the candidate UE.

Although the candidate UE receives and processes a SRS from one or more reference UEs, an example method as described herein may be referred to as "autonomous" because the candidate UE does not need to perform signaling with the gNB or reference UEs to estimate its TA. The candidate UE may remain in its idle state while estimating its TA. In the context of implementing the method, such as in 6G RAN for example, the method is efficient because it reuses existing physical layer signals (SRS signals from a reference UE) that are sent from the reference UE for the gNB as part of the usual physical layer procedures for the reference UE. Moreover, multiple candidate UEs can estimate their TA based on SRS transmission from a single reference UE (or at least some of the same reference UEs). In terms of standardization, the proposed method may add only a few bits to SIB and DCI signaling.

Among other applications, an example method may enable an ML based 6G BTS to adaptively control the Ncs, CP and GP value of preamble formats, whereby the PRACH load will decrease as the number of users increases, rather than increasing.

As described above, the proposed method may be used to estimate TA autonomously and, hence, is different from a conventional TA scheme in 3GPP.

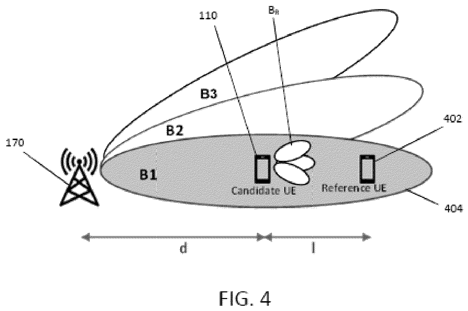

FIG. 4 illustrates an example of a beamformed cell. For brevity, only three beams B1, B2 and B3 are shown. However, more or less beams may be provided. Beam B1 contains a candidate UE 110 whose TA is to be estimated. The candidate UE 110 is capable of receive beamforming, and three UE receiver beams B_{R} are shown in FIG. 4. Following are examples of steps which may be used for estimating the TA at the candidate UE 110.

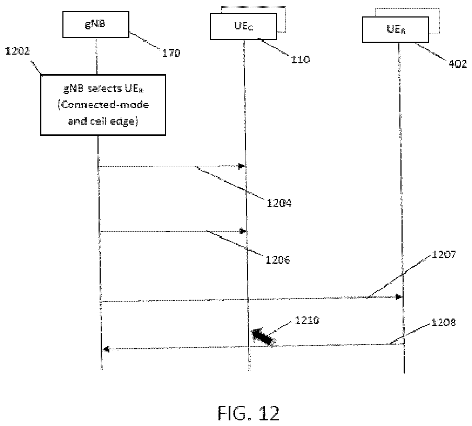

With reference to FIG. 4, the gNB 170 may select another UE 402 in beam B1 which is in a connected state (a connected-mode UE) that is already time aligned with the gNB 170 and located close to the cell edge 404. This is also shown in FIG. 12 at 1202. The cell edge is generally the furthest part of the cell for that beam B1 along the beam's length. Time aligned here means that uplink frames of the UE 402 are time advanced so that its propagation delay to the gNB is fully compensated. This UE 402 is referred to herein as a reference UE. The candidate UE 110 is in an idle mode and, as seen in FIG. 4, is located at a distance "d" from the gNB 170. The reference UE 402 is located at a distance of "d+1" from the gNB 170. Only one reference UE is shown in FIG. 4 for simplicity of description. However, as understood from the description below, more than two UEs may be in the beam B1, and one or more of those UEs (which are in a connected state and time aligned with the gNB) may be used as a reference UE by the candidate UE 110. In one type of example, signals from multiple reference UEs are used by the candidate UE 110 for its autonomously determined timing advance (TA).

The reference UE 402 transmits sounding reference signal (SRS) to the gNB 170. This is also shown in FIG. 12 as 1208. The purpose of the SRS transmission to the gNB is codebook-based link adaptation. However, other purposes regarding use of a SRS, for example beam management and or antenna switching, are not precluded. These types of SRS may also be used with features as described herein. In the example described below, it is assumed that the reference UE 402 transmits an aperiodic SRS. However, in alternate examples, the SRS could be periodic, semi-persistent or aperiodic. The SRS transmitted by the reference UE 402 for the gNB is part of the usual link adaptation procedure. With features as described herein, these types of conventional SRS signals may be additionally used for a new purpose (also referred to herein as being reused) by the proposed method. This is partially illustrated with 1210 in FIG. 12. The candidate UE (UEc) 110 is effectively able to receive 1210 the sounding reference signal (SRS) 1208, even though that signal 102 is sent by the reference UE (UE_{R}) 402 to the network equipment (gNB) 170, and use information from that signal 1208 for an additional new purpose. Thus, the same conventional SRS signals may be used for more than one purpose. In the examples described below the multi-uses include a first use with a first purpose by the gNB in a conventional manner, and a second new use with a second new purpose by the candidate UE 110. The SRS transmission from the reference UE 402 is not requested by the candidate UE 110 or gNB 170 for the exclusive intention of this new second use. Instead, features as described herein are able to merely use preexisting purposed signals for the new second purpose; enabling TA measurements at the candidate UE 110. Thus, single purposed signals may now be used for multiple purposes as described herein, and one of those uses may be for a previously unintended recipient/user.

Similar to 5G, its expected that a 6G gNB will be able to request a UE to transmit aperiodic SRS in a particular symbol using a DCI (downlink control information) used for downlink or uplink data transmission. Thus, the gNB 170 may request the reference UE 402 to transmit aperiodic SRS in a particular symbol using a DCI (downlink control information) used for downlink or uplink data transmission (see 1207 in FIG. 12 for example). With features as described herein, at the same time, the gNB may inform all the UEs in beam B1 that a SRS transmission from the reference UE 402 will occur in a particular symbol. This can be done by transmitting a TA DCI in common search space as further described below. This is partially illustrated with 1204 in FIG. 12. The gNB 170 may also inform all the UEs in beam B1 about parameters necessary to demodulate the SRS signal from the reference UE 402. This can be done using, for example, SIB signaling as further described below.

Based on the information about the reference UE's SRS shared by the gNB 170 in the step noted above, the candidate UE 110 may use that information to demodulate a SRS (see 1210) from the reference UE 402. This is not difficult in TDD deployments because the candidate UE uses the same frequency on uplink and downlink. However, in case of FDD deployments, the candidate UE would have to demodulate the FDD uplink frequency. Thus, the proposed method is naturally suited for TDD cells. However, implementation of the method in FDD cells is also possible.

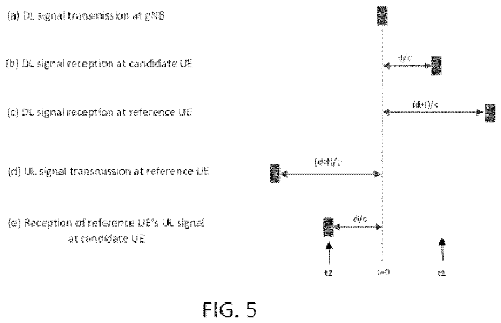

With reference to FIG. 5 at "(a)", the DL transmissions at the gNB may be aligned to time t=0. These transmissions are received at the candidate UE 110 at time d/c (see "(b)" in FIG. 5) and at the reference UE 402 at time (d+1)/c (see "(c)" in FIG. 5) due to propagation delay. The DL transmissions could, for example, be SSB signals transmitted by the gNB 170 at periodic intervals. The candidate UE 110 may record the time at which the SSB reaches it in "(b)" of FIG. 5 as time "t1".

Because the reference UE 402 is time aligned with the gNB 170, the reference UE 402 transmits its SRS using a timing advance of (d+1)/c compared to the gNB time (t=0) to ensure that the reference UE's SRS reaches the gNB 170 at t=0. Because the candidate UE 110 is located between the reference UE 402 and the gNB 170, this SRS signal reaches the candidate UE 110 after l/c seconds. The candidate UE 110 records the time at which the SRS reaches it as time "t2" (see "(e)" in FIG. 5). The reference UE 402 may be time aligned with the gNB to ensure that t1 and t2 are measured reliably, and that the resultant TA which is estimated by the candidate UE 110 is estimated accurately. With an example method, the method does not actually measure the distances; only t1 and t2 are measured.

The candidate UE 110 may calculate its timing advance as TA = t1-t2 = 2d/c. Based on the distance between the candidate UE 110 and gNB 170, this value is correct. The candidate UE 110 may also correctly estimate that absolute time t=0 at the gNB starts (t1-t2)/2 seconds ahead of t1.

The example shown in FIGS. 4 and 5 is merely to illustrate a basic idea of one proposed method. However, many non-ideal aspects may be considered, and the basic idea may be expanded upon to provide robust performance in a real-world network. Some of these aspects are considered in examples below. With the ability to use signals from the reference UE for more than one purpose, it is apparent that the method is highly efficient. While a conventional TA estimation for a UE in an idle mode uses conventional 3GPP procedures and with dedicated physical layer signals from the gNB specific to the candidate UE to estimate its TA, features as described herein may provide an autonomous (or semi-autonomous) TA estimation which does not need to use conventional 3GPP procedures with dedicated physical layer signals from the gNB and, instead, may reuse (or ancillary use) SRS signals which are transmitted by other UEs for the gNB (which are ancillary sensed/received by the candidate UE).

With features as described herein valuable time-frequency resources, which might otherwise would have been used for TA estimation for individual UEs, can instead be used for other uses such as user data for example. Moreover, as mentioned in above, multiple candidate UEs in a same beam may perform TA measurements based on a single SRS transmission from a same reference UE (or same multiple reference UEs) due to signaling of the TA DCI by the gNB 170 in a common search space. In one example, compared with a conventional system which uses messages on both downlink and uplink per UE and suffers from preamble collisions, with features as described herein the only overhead needed is due to the TA DCI and SIB signaling. SIB signaling is partially illustrated with 1206 in FIG. 12. However, as discussed above, this overhead may be only a few bits, is not per candidate UE, and is only on the downlink. Thus, with one example, these are the only changes that will be needed in 3GPP 6G standards to implement one example embodiment as described herein.

Although SRS from reference UEs may be used to estimate TA of the candidate UE 110, the proposed method should not be confused with co-operation-based methods such as side-link signaling for example. With features as described herein, there is no link or direct signaling between the reference UE 402 and candidate UE 110. There is also no UE-specific signaling between the candidate UE 110 and the gNB 170. The candidate UE 110, after receiving the SIB from the gNB, is fully autonomous in estimating the TA based upon the sensed/received SRS signals of other UEs, and can remain in the idle mode while estimating TA. This is in contrast with co-operation-based methods which rely on sidelink/D2D signaling between UEs that generate overhead.

### Effect of Location of Candidate UE and Reference UE on Accuracy of TA Estimate

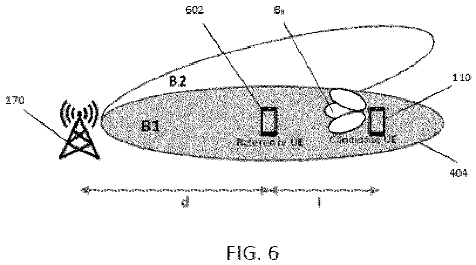

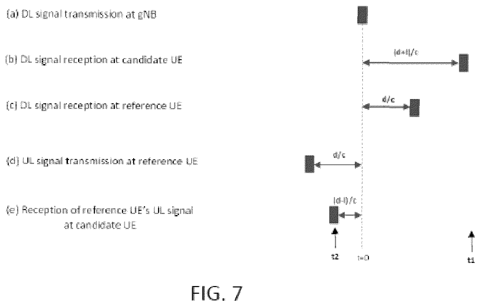

In FIG. 4, the gNB 170, candidate UE 110 and reference UE 402 are in a straight line with the candidate UE located in between the gNB and the reference UE. This is an ideal topology where the estimated TA completely compensates for the propagation delay between the candidate UE and the gNB. However, in a real-world network, the UEs may not necessarily be geometrically located in this manner. Features as described herein may be adapted for considering all possible locations of candidate and reference UEs relative to each other and the gNB. The location of the reference UE with respect to the candidate UE is an aspect to help ensure an accurate TA estimate. To illustrate the importance of this aspect, FIG. 6 shows a scenario where a potential reference UE 602 is located closer to the gNB 170 compared to the candidate UE 110. Similar to FIG. 5, FIG. 7 shows the corresponding timing diagram for the situation shown in FIG. 6.

In this case, where a potential reference UE 602 is closer to the gNB than the candidate UE 110, t1-t2=2l/c is incorrect to be used as a timing advance. The timing advance is highly underestimated because the correct TA for the candidate UE should be equal to 2(d+l)/c. The location of absolute time t=0 is also wrongly estimated because the location of absolute time t=0 should be (t1-t2)/2 seconds ahead of t1. . This situation, where a potential reference UE 602 is closer to the gNB than the candidate UE 110 is, thus, not an acceptable situation in which to use the UE 602 as a reference UE with the candidate UE's autonomous TA estimation. In this type of situation, the candidate UE 110 should not select the UE 602 as a reference UE. Thus, with features as described herein, a feature may be provided to ensure that one or more reference UEs is/are selected correctly by the candidate UE 110. In an example, the candidate UE 110 may ignore the TA measurement based on the topology in FIG. 6 because the candidate UE 110 is receive-beamforming capable and would know that the gNB and reference UE are in a same receive beam or direction. In other words, the candidate UE 110 is able to determine the receive beam in which it receives signals from both the gNB and the potential reference UE, and use that signal receive beam determination to determine whether or not the potential reference UE (602 or 402 for example) is closer to the gNB than the candidate UE. Ideally, from the candidate UE's perspective, the gNB and reference UE should be in diametrically opposite directions as shown in FIG. 4, but of course ideal situations will not occur all the time. Also, from an efficiency perspective, it is desirable that a maximum number of candidate UEs are able to perform reliable TA measurements based on a SRS transmission from a reference UE. In light of the above description, it can be observed that the SRS of a reference UE can be used by a maximum number of candidate UEs to perform a reliable TA measurement when the reference UE is located at the cell-edge 404. Thus, in one example, the gNB may be configured to select only those UEs that are located near the distal cell-edge as reference UEs. Identifying if a reference UE is close to the cell-edge is easy because the reference UE is in a connected state or connected mode with the gNB and, therefore, the reference UE can signal its TA to the gNB. A connected-mode UE that is time aligned with the gNB, and whose TA value is close to the value expected for a cell-edge UE, can be chosen as a reference UE. Because of the narrow beamwidths in beamformed cells as illustrated with B1 for example, such a reference UE will be located almost ideally for a candidate UE in the beam (the candidate UE being located further inward from the distal cell edge 404 and closer to the cell center) and the estimated TA will be closer to the ideal correct value.

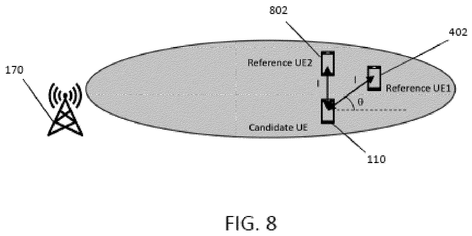

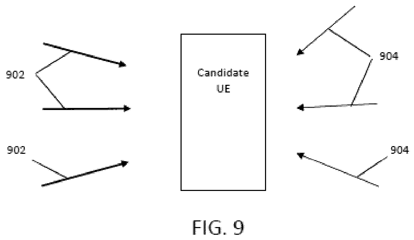

As noted from the above, in one type of example a potential reference UE may be located close to the cell-edge before being considered or selected as a reference UE by the candidate UE for TA estimation. However, another topology to consider is where the candidate UE is also located near the cell edge. FIG. 8 shows a candidate UE 110 and two reference UEs 402 and 802 (also referred to below as reference UE1 and reference UE2, respectively). Both reference UEs 402, 802 are located at the same distance l from the candidate UE 110. The candidate UE 110 may be configured as UE capable of receive beamforming and configured such that the candidate UE 110 will consider only those TA measurements valid for which the potential reference UE is not located closer to the gNB than the candidate UE. In other words, the azimuth angle θ of the receive beam at the candidate UE, while receiving from the reference UE, is -90°< θ < 90°. In the situation shown in FIG. 8, reference UE2 802 is at θ=90°; located at one of these extremes. The candidate UE 110 does not need to determine the exact angle θ at which the reference UEs are located. The candidate UE 110 may be configured to merely ensure that the signals from the reference UEs are received in receive beams that are generally opposite to the receive beam from which the gNB's signal is received. This is illustrated, generally, in FIG. 9 with directions arrows 902 and generally opposite direction arrows 904. The arrows 902 illustrate signals from a gNB which may be received at a first side of the candidate UE and the arrows 904 illustrate signals from one or more reference UEs which may be received at an opposite second side of the candidate UE. For example, if the UE can form only two receive beams of 180° beamwidth each, then one receive beam would be formed towards the gNB and another towards the reference UEs. In the example in FIG. 8, the candidate UE 110 and reference UE2 802 are located at a same distance from the gNB and, hence, are expected to have similar TA values. Reference UE1 402 is located a little further away from the gNB than the candidate UE and, therefore, has a higher TA value. By preparing timing diagrams like those in FIGs. 5 and 7, it can be deduced that the TA estimate for candidate UE 110 in FIG. 8 will be underestimated when UE2 802 is used as a reference UE. This is because of the time taken by the SRS signal to travel from UE2 802 to the candidate UE 110. UE1 402 is a similar distance away from the candidate UE 110 as UE2 802. However, the TA estimate for candidate UE 110 will be closer to the correct TA value when UE1 402 is used as a reference UE. This is because the TA value with using UE1 as a reference UE is higher than the TA value of using UE2 802 as a reference UE. Irrespective of the distance of the reference UE from the candidate UE, a reference UE for which θ=0° is ideal. This is the case in FIG. 4.

When the distance between the potential reference UE and the candidate UE is not significant (for example, 100-200 meters for a cell with radius of 10 km), then the value of θ within the range -90°< θ < 90° may be considered to not matter. If the value of the distance l is significant (for example, one km for a cell with radius of 10 km), the TA value is underestimated when θ>0°, with the worst case being θ=90°; which is the case when the TA estimate is derived based on the measurement from UE2 802 for example. A TA measurement based on a single reference UE with θ close to 90° would possibly introduce error in the TA estimate for a candidate UE that is located close to the cell edge. In one example embodiment, a candidate UE preferably knows the distance at which a reference UE is located; such as to be able to ascertain if a TA estimate is good or not. However, an example method does not require the candidate UE to measure the distance to the reference UE. In an example embodiment, to ensure that the TA is not underestimated, the candidate UE may be configured to filter the TA measurements from multiple reference UEs and prioritize measurements for which θ is closer to 0°. Therefore, the gNB may configure multiple reference UEs in a gNB beam, based on which candidate UE may perform multiple TA measurements. As noted above, in practice the candidate UE would not need to determine the exact value of θ. The candidate UE may be configured to prioritize a receive beam which is located diametrically opposite to the receive beam from which the gNB's signal is received. Examples of some mechanisms that enable the candidate UE to filter the measurements without knowing the exact value of θ are discussed below.

Various criteria can be used by the candidate UE to filter the multiple TA measurements. As noted above, SRS signals arriving from a direction with θ closer to 0° may be given higher weightage when estimating the TA. SRS signals from other directions may be given higher weightage only if the candidate UE can ascertain that the reference UE is located close to it and, hence, the angle is not important. In an exemplary implementation, to ascertain if the reference UE is close to it, the candidate UE may measure the received power of the SRS. As specified in 4G and 5G, and expected in 6G, other parameter values being the same, transmitted power of SRS is expected to be higher when the pathloss (i.e., the distance from the gNB) is higher. Based on the SSB power and received RSRP, the candidate UE can measure the pathloss from the gNB to its location and determine the power Pc it would need if it was to transmit an SRS. In FIG. 8, UE1 402 is located further away from the gNB than the candidate UE and at an angle θ closer to 0° and, therefore, would transmit SRS with a power greater than Pc. Thus, when received at the candidate UE, its SRS power would be close to Pc. UE2 802 would transmit SRS with power almost equal to Pc. Thus, when received at the candidate UE, its SRS power would be much lower than Pc (except when it is located close to the candidate UE). Based on the received powers of the reference UEs at the candidate UE, the candidate UE can ascertain which measurements may be considered valid and which should be filtered out and not used for the TA estimation. In addition, if the reference UE is capable of transmit beamforming, it would transmit its beam towards the gNB with a relatively narrow beam and, therefore, its SRS would only be received by the candidate UE if θ is close to 0°, and not received by the candidate UE if θ is close to 90°.

In one example, a criterion that can be used to filter TA measurements is the estimated TA value from individual measurements. From the earlier analysis, when θ is much higher than 0° and the reference UE is not close to the candidate UE, the TA measurement is lower. Therefore, if the candidate UE has multiple TA measurements based on multiple reference UEs from more than one receive beam in -90°< θ < 90°, the candidate UE may be configured to filter out measurements which are much lower than other values; because these are expected to be incorrect and from a direction for which θ is close to 90°. A 6G UE is expected to have machine learning (ML) capabilities. Such a 6G candidate UE can use measured TA, measured power and receiver beam of the received SRS signal, or a combination of all three, to filter the TA measurements. Based on these multiple criteria and TA measurements from multiple reference UEs, such a UE can filter the measurements, and derive a TA estimate that is close to the correct value. Based on the distribution of the filtered measurements, the UE can also determine if the quality of the estimate is good.

In the example in FIG. 8, the candidate UE 110 is located away from the edge of the beam created by the gNB and, therefore, may prioritize TA measurements for which θ is closer to 0°. A UE located close to the edge of two beams created by the gNB may be configured to prioritize measurements which are a little offset from 0°. The UE may be configured to ascertain if it is located at the edge of two gNB beams by measuring the RSRP levels of individual beams. In practice, the candidate UE may prioritize receive beams which are opposite to the gNB.

It is important to note that there is no correspondence between the candidate and reference UEs. A candidate UE can perform multiple TA measurements corresponding to multiple reference UEs. Multiple candidate UEs can perform TA measurements based on the SRS signal transmitted by a single reference UE. Thus, multiple candidate UEs can estimate their TAs based on SRS signals transmitted by multiple reference UEs.

### Expected Error in TA Estimate and Effect on Preamble Design

Similar to 5G cells, 6G cells are expected to have narrow beams. Because the reference UEs are located near the cell-edge, it can be observed from FIG. 4 that for a candidate UE located far away from the cell-edge, irrespective of the reference UE it uses, θ will always be close to 0° within a few degrees, the filtered TA measurements will have a distribution with low variance, and the TA estimate will be close to the correct value. It can be observed from FIG. 8 that for a candidate UE located near the cell-edge, for a cell beamwidth of Φ radians and cell radius R, in the worst case, 1 is equal to ΦR when θ=90°, and the TA measurement error it introduces is ΦR/c. Because it is recommended to use multiple TA measurements, this worst-case measurement may be filtered out. However, this calculation may be used for determining a worst-case maximum error in the TA estimate. So, if a candidate UE was to estimate its TA based on such a TA measurement, it would underestimate the TA by ΦR/c. As an example, considering a beamwidth of 30° (Φ=Π/6), the estimation error will be ~R/2c. This is just 25% of the round-trip time (2R/c) which is used as the propagation distance factor in preamble design. Thus, even in the worst case and with a considerably high beamwidth, using the proposed method, the gNB can use a preamble format where the CP, GP and Ncs sizes can be reduced by 75%. Also, using a reference UE from an adjacent beam would introduce too much error in the TA measurement for candidate UEs located near the cell-edge or away from the cell-edge. Based on this discussion, although the method performs best in beamformed cells, non-beamformed cells where the candidate UE can autonomously detect the direction of the reference UE can also use the proposed TA estimation method. Such a UE in a non-beamformed cell might, for example, only use the TA estimate when it is capable of determining that θ is close to 0°.

Thus, the method may provide reliable TA estimates when the candidate UE is located away from the cell edge. For such a candidate UE, measurements based on two or three reference UEs can provide a good TA estimate because the variance in the measurements will be less. A candidate UE located in such a way could use TA measurements from multiple reference UEs to verify that the estimated TA is indeed correct. When the candidate UE is located closer to the cell edge, TA measurements corresponding to multiple reference UEs may have a higher variance, but the error in the TA estimate may be bounded. A preamble design using this worst-case error in the TA estimate may still provide a 75% reduction in CP, GP and Ncs sizes. In general, the method performs better as the beam becomes loaded (i.e., the number of reference UEs increases) because it allows the UE to obtain multiple measurements for which θ is closer to 0°, eventually helping the UE in converging to a TA estimate with minimal error.

Because the proposed method allows an idle mode UE to estimate its TA, an application of the estimated TA is to allow the UE to pre-compensate for the Propagation Delay (PD) while sending the preamble and, thus, allow the gNB to use a preamble format with smaller values of CP, GP and Ncs. Here pre-compensate means that the UE transmits the preamble after advancing the uplink transmission by the TA value that it has estimated. Based on the maximum error expected in the autonomously estimated TA, a preamble design with appropriate values of CP, GP and Ncs can be selected. A few of the available PRACH occasions may also be reserved for preamble formats with CP, GP and Ncs values corresponding to twice the cell radius, so that a 6G UE can fallback to using the legacy TA estimation method. These can be used in case enough reference UEs are not available and, therefore, a 6G UE cannot estimate its TA reliably using the existing reference UEs. In one example a 6G gNB can, therefore, have two or more types of PRACH occasions supporting at least two types of preamble formats such as: preamble formats with smaller CP, GP and Ncs for candidate UEs that can estimate their TA reliably, and preamble formats with larger CP, GP and Ncs (corresponding to twice the cell radius) for candidate UEs that cannot estimate their TA reliably. The gNB can also control use of the proposed method to ensure that a UE uses PRACH occasions with smaller values of CP, GP and Ncs only when a minimum number of reliable TA measurements are available after filtering, or the candidate UE is located away from the cell-edge. This is discussed further below.

### Aspects of SRS Scheduling for Reference UEs

Quality of the TA estimate may depend on the time when it is estimated and the time when it is used. This may depend on mobility of the candidate UE. Referring to FIG. 5, time t1 depends on received time of the SSB. If a candidate UE is aware that it is moving, it may calculate the value of t1 from the latest SSB Burst Set which is received before the PRACH occasion when the candidate UE will transmit its preamble. To ensure that time t2 is accurate, gNB may try to schedule SRS for reference UEs in the slots preceding the PRACH occasions having preambles with smaller CP, GP and Ncs. This will ensure that the TA value calculated for a moving candidate UE has not changed significantly before the candidate UE transmits its PRACH.

The filtering of TA measurements at the candidate UE may consider the UE's own mobility. If it knows that it is moving, then older TA measurements may not be given higher weightage in the final estimate. As discussed earlier, based on machine learning (ML) processing of the TA measurements, the candidate UE can ascertain the quality of its TA estimate. If the quality is not good and the filtered TA estimates have high variance, the candidate UE may use PRACH occasions having preambles with higher CP, GP and Ncs. As discussed further below, the gNB may also control TA measurements of the candidate UE and forbid it from using PRACH occasions having preambles with smaller CP, GP and Ncs if a reliable TA estimate cannot be guaranteed.

The TA of the reference UE may completely compensate for the propagation delay of its signal to the gNB. Therefore, it is preferred that the TA for the reference UEs is updated by the gNB before they transmit their SRS. However, for stationary reference UEs, this may not be necessary. Hence, it is preferred that the UEs which are selected as reference UEs are stationary or slow moving to ensure that the TA measurements are robust. In an example embodiment, FWA (Fixed Wireless Access) UEs located near the cell edge can be ideal reference UEs from this perspective.

The gNB does not always request a UE to perform SRS transmission for link adaptation. For a UE that is transmitting in the uplink at full rank, DMRS can be used to perform link adaptation. In such cases, candidate UEs may not be able to perform TA measurements due to lack of SRS transmissions from reference UEs. However, this is unlikely to happen because of the way reference UEs are selected in the proposed method. Because the reference UEs are located near the cell-edge, it is highly likely that their transmission rank is not full rank. Hence, it is highly likely that SRS transmissions will be requested from the reference UEs.

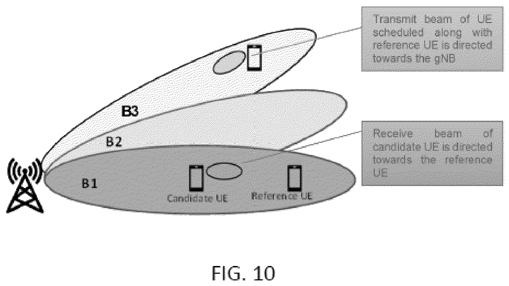

Yet another aspect which may be considered is the time alignment at the candidate UE of the cumulative uplink transmissions from UEs scheduled along with the reference UE's SRS. The transmissions from UEs within a cell are time-aligned with respect to the gNB, i.e., to ensure that these are received at the gNB within the cyclic prefix (CP) time window. When the reference UE's SRS is received at the candidate UE, the transmissions from UEs scheduled in the same symbol as the SRS might not be received within the CP time window, because they have not been transmitted with this consideration. Also, transmissions from UEs in symbols that are adjacent to the reference UE's SRS may spill over the symbol boundary and interfere with the SRS reception when received at the candidate UE. This can make the proposed method unusable due to excessive ISI and ICI from transmissions in the same and adjacent symbols. However, this can be avoided easily by scheduling UEs from other beams in the same symbol and symbols adjacent to the reference UE's SRS. The candidate UE would not receive these signals in its receiver beam because the candidate UE's receiver beam is directed towards the reference UE. Therefore, the reference UE's SRS signal received at the candidate UE would not be corrupted by ISI and ICI. For example, as illustrated in FIG. 10, when the reference UE's SRS is scheduled, uplink transmission from a UE in beam B3 can be scheduled in the adjacent symbols. Uplink transmission from the UE in beam B3 would be transmitted towards the gNB. Because the receive beam of the candidate UEs in beam B1 is directed towards the reference UE, uplink transmission from UE in beam B3 would not be received at the candidate UE and would not corrupt reception of the reference UE's SRS with ICI and ISI. Even if the signal from the UE in beam B3 were to find its way towards the reception beam of the candidate UE due to multipath reflections, the power of this interfering signal would be too low to significantly impact SNR of the demodulated SRS signal. In an exemplary implementation, the reference UE's SRS can be scheduled in the first uplink symbol after the gap period in a special slot. A special slot is a slot containing downlink symbols, followed by a gap period, which is followed by uplink symbols. In such an implementation, the above scheduling consideration might only have to be satisfied for the symbol containing the reference UE's SRS and the subsequent symbol. The illustration in FIG. 10 also shows that prioritizing TA measurements from reference UEs for which θ is closer to 0° is beneficial in terms of reducing ICI and ISI impacts from UEs scheduled along with the reference UE.

If the transmit beam of the UE in gNB beam B3 is not narrow and its signal is expected to interfere with the receive beam of the candidate UEs in gNB beam B1, the gNB can alternatively schedule a UE in a gNB beam located orthogonal to or diametrically opposite to gNB beam B1. This would ensure that the candidate UE can receive the reference UE's SRS reliably. Thus, although it is good to have, it is not mandatory for the UEs to support transmit beamforming when using the proposed method.

### gNB Control of TA Measurements

As discussed above, the preamble design with smaller values of CP, GP and Ncs is selected based on the maximum error expected in the autonomously estimated TA for a candidate UE located close to the cell-edge. For additional reliability, a gNB may use CP, GP and Ncs values corresponding to the maximum expected error, but desire to restrict use of the proposed method to candidate UEs located away from the cell-edge. To this end, in an exemplary implementation, the gNB can signal a threshold RSRP_{TA} to the UEs. The candidate 6G UE may perform TA measurements using the proposed method only if its measured SS-RSRP (or equivalent measurement quantity in 6G) is greater than RSRP_{TA}. A 6G gNB can derive the value of RSRP_{TA} by averaging the SS-RSRP values sent by the reference UEs, and then adding an offset which determines the range within which the gNB allows candidate UEs to use the proposed method. A lower offset allows the proposed method to be used by candidate UEs closer to the cell-edge and vice versa for a higher offset. Because a reference UE is in connected mode, layer-1 SS-RSRP values from the reference UE can be made readily available at the gNB from the CSI reports that are sent for beam management by a connected mode UE, like in 5G. In addition, a cell-edge reference UE might also be configured to send layer-3 measurement reports which include layer-3 SS-RSRP values. If the SS-RSRP measured at the candidate UE is below RSRP_{TA}, the candidate UE can ascertain that its location is closer to the cell-edge, and it may therefore not be allowed to use the proposed method to autonomously estimate its TA. The candidate UE would not perform TA measurements using the proposed method and, instead, use PRACH occasions with CP, GP and Ncs values corresponding to twice the cell radius. The gNB can also signal a number N_{RefUeTA} denoting the minimum number of TA measurements that shall be available for the UE to estimate its TA. If the candidate UE cannot perform N_{RefUeTA} TA measurements, it may assume that reliable autonomous TA estimation is not possible, and it may fall back to using PRACH occasions whose CP, GP and Ncs values correspond to twice the cell radius. The gNB can signal RSRP_{TA} and N_{RefUeTA} within a SIB message.

For candidate UEs that are capable of speed estimation, the gNB can similarly signal a speed threshold via a SIB message. This can be used to restrict a high-speed UE from using an unreliable TA estimate and creating interference. A candidate UE travelling at a speed above the threshold may use PRACH occasions whose CP, GP and Ncs values correspond to twice the cell radius.

### Time Dispersion

The effect of time dispersion of the SSB transmitted by the gNB and SRS transmitted by the reference UE is not shown in the figures. However, the impact may be similar to the way it is in 3GPP, i.e., multipath introduces a deviation of a few microseconds in the calculated TA due to the delay spread. The effect of delay spread may be, in fact, lower when using this method. With reference to FIG. 5, t1 may be increased due to time dispersion between the gNB and the candidate UE. But t2 may also be increased due to time dispersion between the reference UE and the candidate UE. Therefore, the proposed method may reduce the impact of time dispersion on the estimated TA value compared with the legacy method in 3GPP.

Another implementation related timing aspect is that the t1 and t2 measurements in FIG. 5 might not always correspond to the same OFDM slot or symbol. In particular, t2 might be measured only when the gNB needs to receive a link adaptation SRS from a reference UE. However, the candidate UE may be aware of the slot length and OFDM symbol length. Therefore, if t1 and t2 are measured in different slots and/or symbols, the timings can be normalized by subtracting a time equal to the number of slots and/or symbols between t1 and t2.

### Lightly Loaded Beams

In lightly loaded beams, the quantity of reference UEs is expected to be less, and it might not be possible for some candidate UEs to perform enough measurements to obtain a reliable TA estimate using the proposed method. However, the motivation to save time-frequency resources is also much less at lighter loads. Therefore, at lighter loads, preambles with large (corresponding to twice the cell radius) CP, GP and Ncs can be used more often by candidate UEs. The number of such PRACH occasions can be higher compared to PRACH occasions with smaller CP, GP and Ncs. When the beams are highly loaded, multiple reference UEs and hence TA measurements are available, increasing the feasibility of the proposed method. The motivation for reducing use of time-frequency resources for TA estimation and instead using these resources for user data is also higher. Therefore, the proposed TA estimation method can be used more often by candidate UEs in such cases. The number of PRACH occasions with smaller CP, GP and Ncs can be higher compared to PRACH occasions having CP, GP and Ncs corresponding to twice the cell size. Thus, the proposed method is unique in that it saves more time-frequency resources and reduces signaling load in highly loaded scenarios. The conventional method in 3GPP would instead suffer from throughput degradation because of increased load of TA estimation as the number of UEs increases.

### TA Estimate for Reference UEs

It has been assumed in the example method noted above that the reference UEs are already TA aligned with the gNB. Some of these UEs might have been TA aligned in idle state using the proposed method when they were located away from the cell edge and would have moved to connected mode by using PRACH occasions with smaller CP, GP and Ncs. Afterwards, continuous TA alignment for such UEs may be performed in connected mode. When such a UE moves closer to the cell-edge, it can be used as a reference UE by the gNB. In an exemplary implementation, FWA (Fixed Wireless Access) UEs at the cell-edge can be used as reference UEs. Such UEs will be perpetually TA aligned with the gNB. In other cases, a cell-edge candidate 6G UE can be TA aligned using PRACH occasions having CP, GP and N_{CS} corresponding to twice the cell size and then be used as a reference UE.

### Use Cases, Advantages, and Comparison with Prior Art

Traditionally, in every generation, and even in 5G, UE-specific signals are used for procedures specific to that UE. With an example method as described herein, the method may enable a paradigm shift in 6G gNB where UE-specific signals (SRS in this case) belonging to a specific UE may be processed to derive useful information for other UEs. As a result, overall signaling load is reduced, ultimately improving cell throughput. The gNB may transmit beamformed signals in 5G, but because UEs with receive beamforming are not universal in 5G, the proposed method may not work reliably in 5G. The proposed method will work reliably in 6G due to the receive beamforming capability of 6G UEs, and result in the applications and advantages noted below.

Adaptive control of combination of preamble formats may be provided, such as with a 6G gNB for example. A lightly loaded gNB may be aware that the number of reference UEs is less than needed, and some candidate UEs might not be able to perform enough measurements, to estimate TA using the proposed method. Therefore, the gNB can configure more PRACH occasions which have a preamble format with higher CP, GP and Ncs values (corresponding to twice the cell size). As the load increases and the gNB knows that enough reference UEs become available for a majority of the candidate UEs, it can reduce the number of PRACH occasions with a preamble format having higher CP, GP and Ncs, and increase the number of PRACH occasions with a preamble format having a lower CP, GP and Ncs. In addition, for occasions having lower CP, GP and Ncs, the gNB can adapt the CP, GP and Ncs value based on the error expected in the TA estimates. Thus, a RACH design for 6G gNB can be created which adapts the combination of preamble formats to the cell load. Because more candidate UEs can derive a reliable TA estimate using the proposed method as the beam becomes heavily loaded, more PRACH occasions with lower CP and GP values can be used, freeing up time-frequency resources used by the larger CP and GP. These resources can then be used for improving cell throughput or for adding more PRACH occasions. If the total number of PRACH occasions are kept the same as the load increases, the method may show the paradoxical advantage that the time-frequency resource usage for PRACH decreases as the number of UEs increases, rather than increasing.

Idle-mode UE positioning may be provided. By calculating TA using the proposed method and having knowledge of the beam, an idle mode UE can estimate its approximate location in isolated cells. In cells which are not isolated, this method is useful for UEs located away from the cell-edge because they might not receive signals from multiple gNBs to perform OTDOA location estimation. Reconfigurable Intelligent Surface (RIS) for UE positioning for 6G UEs located near the cell center has been suggested. However, unlike the RIS, the proposed method can be used for positioning idle mode UEs and does not need a RIS.

A candidate UE can measure TA based on multiple reference UEs, filter the measurements, and based on the distribution of the filtered measurements, it can ascertain if the quality of the TA estimate is good. A UE which knows that the quality of the TA estimate is not good can use PRACH occasions with higher CP, GP and Ncs values corresponding to twice the cell size. The gNB can also explicitly control the quality of the estimate using RSRP_{TA} and N_{RefUeTA}. Therefore, the method is robust.

2-step RACH may require a guard period of a few symbols to combat ISI due to propagation delay. The guard period may correspond to twice the cell radius. A UE using the proposed method can compensate for the propagation delay and, therefore, may use a guard period to account for only the expected TA estimation error. Thus, the proposed method reduces the wastage of precious PUSCH resources in case of 2-step RACH. As discussed above, the GP can be reduced by more than 75% for a beam with 30° beamwidth.

Signaling based TA estimation methods, may provide a TA only after the signaling required for TA estimation has been completed. Because PUSCH data can be transmitted only after TA is compensated, these methods suffer from high latency. Using the proposed method, the UE can directly start transmitting on the PUSCH, as in 2-step RACH, resulting in lower latency.

By pre-compensating for the PD before preamble transmission, the number of preamble resources can be increased such as by reducing Ncs for example. As a result, preamble planning may also become much simpler.

Reduced CP and GP enables an energy efficient RACH signal design. UE power is not wasted on redundant time-frequency resources.

Regarding security, signals specific to a UE are demodulated by other UEs, but this is not an issue because SRS is only a physical layer signal and does not contain any user data.

While the description of the proposed method uses aperiodic SRS, the method does not preclude the use of other transmissions from the reference UEs, including but not limited to, periodic SRS, and DMRS associated with PUCCH/PUSCH transmissions. All these transmissions are sent by the reference UE with timing advance and could be used to estimate the TA for a candidate UE. DMRS signals in particular provide an advantage because symbols adjacent to the DMRS are from the same user and, therefore, the scheduler is not constrained in the time domain to schedule UEs from other beams along with the reference UE as in FIG. 10.

While the method is especially useful for idle mode UEs, connected mode UEs can also autonomously adjust their TA if they know that the TA estimate quality is good and error-free. This is especially relevant for candidate UEs located close to the cell center. As a result, the connected mode time alignment timer in 6G, corresponding to the timeAlignmentTimer in 5G, can be set to a high value and signaling that is exclusively used for timing alignment can be reduced. A 6G gNB can set the time alignment timer for a connected mode candidate UE to a high value in a loaded beam because a candidate UE can autonomously generate a robust TA estimate in such conditions. Thus, for connected mode UEs also, the proposed method can help in reducing signaling overhead in loaded conditions. Similarly, the common time alignment timer in 6G, corresponding to the timeAlignmentTimerCommon in SIB1 in 5G, can be set to a high value in loaded beams.

In US 2022/0217669 A1, TA adjustment is described as being performed autonomously by the UE based on RSRP and UE location, and incurs signaling overhead. US 2019/0159149 A1 described using RSRP and satellite positioning to estimate TA. In comparison, UEs using the proposed method also perform TA estimation autonomously; however, there is minimal signaling overhead and the proposed method is more predictable because TA is measured directly from timing measurements instead of deriving the TA from RSRP. Also, satellite positioning might not be available always.

In US 2021/0297976 A1, simple cell-range based techniques are used, and UL transmission is performed multiple times if the predicted TA value happens to be incorrect, which incurs signaling overhead. In contrast, the current proposal explicitly creates a TA estimation method that reuses existing signals transmitted by other UEs. Because multiple UEs and hence data points are available, the current proposal is more robust compared to US 2021/0297976 A1. Also, the quality of the estimate, and hence the robustness, can be controlled by the gNB.

Unlike some schemes in prior art, the proposed method does not require multiple cells, the overhead of multiple cell-specific signals, and co-operative communication between the cells. In fact, the proposed method may work in a single isolated cell as well.

Some schemes in prior art work only for candidate UEs that are stationary. On the contrary, the proposed method is generic and suitable for candidate UEs that are mobile. Such schemes require random-access signaling for an initial TA calculation after which TA adjustment can be performed. However, the proposed method can perform TA adjustment for a UE which has not performed random-access on the network.

Unlike some schemes in prior art, UEs using the proposed method do not need to perform complex processing of RSRP values. Also, because direct TA measurements are available using the proposed method, the estimates are robust compared to processing based on RSRP values. As a result, the design of CP, GP & Ncs can be deterministic because the maximum error for a single measurement is bounded in the proposed method as discussed above. In addition, the gNB can control and ensure the reliability of the estimate by using parameters RSRP_{TA} and N_{RefUeTA}. Unlike schemes in prior art, the proposed method does not require training data.

Compared with a passive technique, the proposed method does not require a preamble transmission (i.e., signaling) or the use of passive receiving equipment with known location for estimating the TA. Existing UEs may be used as reference UEs, and no additional hardware is needed. The proposed method also does not require knowledge of the exact location of reference UEs.

Compared to the co-operative methods, the proposed method does not need additional hardware or UE support for sidelink/D2D communication.

In one example, while the proposed idea has many advantages, there are no side effects because if a candidate UE can't estimate its TA reliably using the proposed method, it can fall back to using PRACH occasions with CP, GP and Ncs values corresponding to twice the cell size.

As noted above, in terms of standardization, the proposed method may add only a few bits to SIB and DCI signaling.

### Standardization Aspects

The proposed method may be enabled in 6G by including the following signaling components:
- To demodulate the SRS transmitted by the reference UE, its parameters should be known to the candidate UEs. These parameters in a 6G gNB would correspond to the 5G parameters within the SRS-Resource IE in TS 38.331. These parameters can be defined within a SIB message in 6G. This SIB message can also signal the value of RSRP_{TA} and N_{RefUeTA} if necessary. The gNB may configure a reference UE to transmit its link adaptation SRS using the parameters signaled in the SIB message. All reference UEs may transmit their link-adaptation SRS using this common set of parameters; albeit at different times.
- The Timing Advance DCI may be used to inform the UEs in a base-station beam that an SRS transmission will take place from a reference UE which can be used for TA measurements. The PDCCH is beamformed and, therefore, only UEs within the same base-station beam will be informed about the SRS transmission from the reference UE. The TA DCI may be sent in common search space. Because the parameters defining the SRS are set in a SIB message, the TA DCI may just be used to inform the UEs in a beam about an upcoming SRS transmission, and therefore consume a minimal number of bits.

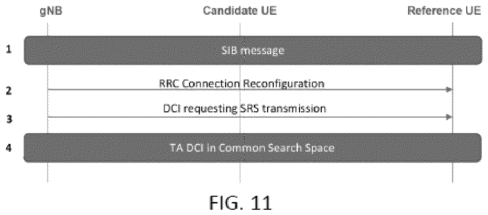

The proposed method may define parameters of an SRS resource in a SIB message and signal the transmission of an SRS using a TA DCI containing a minimal number of bits. In return, tens of candidate UEs in a beam may be able to autonomously perform TA estimation. The signaling load for TA estimation may not increase in proportion to the number of UEs. FIG. 11 illustrates an exemplary 6G signaling flow for TA estimation using the proposed method. The steps in this example MSC (Message Sequence Chart) are:
1. A gNB signals the parameters defining the reference UEs' SRS via a SIB. RSRP_{TA} and N_{RefUeTA} can also be sent using the same SIB message if necessary.
2. To ensure that the designated reference UEs transmit their SRS using the parameters signaled in the SIB message, whenever the gNB identifies a new reference UE, it shall configure one of the reference UE's SRS signals with the parameters signaled in the SIB message. The usage/purpose of the SRS would remain codebook-based link adaptation; only the SRS properties e.g., time-frequency resources, hopping, etc. would be similar to the parameters signaled in the SIB message. As in 5G, SRS configuration for the reference UE is expected to be part of the standard 6G call flow. The only change due to the proposed method is that SRS parameters will be set according to those defined in the SIB message.
3. Reference UE in connected mode is sent a DCI for uplink or downlink transmission, with SRS request bits set appropriately to request the reference UE to transmit the link adaptation SRS configured in step 2 above. As in 5G, this is expected to be part of the standard 6G call flow and the proposed method does not change it in any way.
4. While a DCI for uplink or downlink transmission containing SRS request bits is sent to the reference UE, the gNB sends a TA DCI in common search space informing all UEs within the beam that a reference UE will transmit an SRS, which they can use to perform TA measurements.
Subsequently, the reference UE performs SRS transmission and candidate UEs can perform TA measurements as per the timing diagram in FIG. 5.

Physical layer signals of a reference UE, such as SRS for example, can be used for autonomously measuring the TA for one or more candidate UEs. A candidate UE can estimate its TA based on measurements from more than one reference UE. The candidate UE can perform TA estimation in idle mode.

The parameters of the SRS maybe be broadcasted to the UEs within a beam using broadcast signaling, such as SIB signaling for example. The candidate UEs in a beam may be informed of the transmission of SRS from the reference UE using broadcast signaling, such as a TA DCI transmitted in common search space for example. The reference UE is configured with the SRS parameters using a point-to-point RRC reconfiguration message. Candidate UEs use the broadcast information.

The reference UEs may be UEs that are located at the cell-edge or close to the cell-edge. The reference UEs may be time advanced so that they are time aligned with the gNB.

The candidate UE may be capable of receive beamforming with a minimum requirement of two (2) receive beams. The proposed method does not require knowledge of the exact angle from which the signal is received by the candidate UE.

The transmissions scheduled in a same symbol as the reference UE's SRS and symbols adjacent to the SRS may be from UEs that are in a gNB beam that is far away, i.e., not adjacent, to the gNB beam in which the reference UE is located.

The proposed method may have a bounded estimation error. A gNB can tailor the preamble design according to the maximum expected TA estimation error. With an example method, a bounded estimation error is not sent to the candidate UE. In addition, switching can be based on RSRP_{TA} and N_{RefUeTA} as inputs from network equipment to apparatus. A first timing advance mode may use PRACH preambles with a shorter cyclic prefix, guard time and Ncs. The length of these parameters depends on the maximum value of the estimation error. Effectively, the estimation error will be taken care of by the shorter cyclic prefix, guard time and Ncs. Thus, basing the values of these parameters on the bounded estimation error will ensure that the proposed method works in a robust manner.

As noted above, an example method does not determine location. RSRP_{TA} can be used as a parameter to decide if the candidate UE is near the cell edge or cell center. This parameter can be used as an input for switching, and the example method does not actually calculate the distances.

The proposed method may perform better when reference UEs are stationary or FWA UEs. FWA UEs may serve as ideal reference UEs.

The primary content of SIB is the SRS parameters (parameters containing at least the time and frequency location of the SRS). RSRP_{TA} and N_{RefUeTA} are other parameters which may be used to control robustness of the method. The gNB can control maximum TA estimation error and, hence, the robustness of the method using parameters RSRP_{TA} and N_{RefUeTA}. The gNB can restrict high speed candidate UEs from using the proposed method for TA estimation.

The gNB can have two types of PRACH occasions using two different preamble formats: one preamble format having higher CP, GP and Ncs, and a second preamble format having a lower CP, GP and Ncs. The gNB can adapt the number of PRACH occasions according to the UE load in a beam.

Features as described herein may be used to provide a mechanism to estimate timing advance for UE in idle mode for 6G. A RAN may select a connected-mode UE in a beam that is already time aligned with the RAN and located close to the cell edge; the UE may be referred to as a reference UE. The RAN may send symbol information in a TA (timing advance) DCI in common search space to candidate UEs in idle mode in the beam to monitor SRS (Sounding reference signal) transmission in that symbol and inform the UEs about parameters necessary to demodulate the SRS signal through SIB signaling. When the reference UE transmits SRS to the RAN, the candidate UE may demodulate the SRS from the reference UE, based on the information about the reference UE's SRS received from the RAN. The candidate UE may then autonomously estimate TA based on that demodulated SRS signal. Thus, features may provide a method for autonomous timing advance (TA) estimation for idle mode UEs, by reusing the SRS signal sent by the connected mode UEs in cell edge, for candidate UEs to estimate the TA of the candidate UE in the idle mode, such as in 6G for example.

There can be one or more reference UEs. The DL transmission can be SSB. The candidate UE may be capable of receive beamforming with a minimum requirement of two (2) receive beams. The candidate UE may autonomously estimate TA in following steps:
- The RAN performs DL transmissions aligned to time t=0 and these transmissions are received at the candidate UEs and at the reference UE with propagation delay.
- The candidate UE records the times at which the DL signal and SRS reaches it and calculates its timing advance as difference in between both the times.
The candidate UE can also correctly estimate that absolute time t=0 at the RAN starts (t1-t2)/2 seconds ahead of t1. The transmissions scheduled in the same symbol as the reference UE's SRS and symbols adjacent to the SRS are from UEs that are in a RAN beam that is not adjacent to the RAN beam in which the reference UE is located. The gNB performs the scheduling. The reference UEs may be stationary or FWA (Fixed Wireless Access) UEs. The gNB may select if the reference UE is stationary or FWA. The RAN may adapt the number of PRACH occasions according to the UE load in a beam.

Features may be used to provide reduction in overall signaling load. Features may be used to provide improvement in cell throughput. Features may be used to provide adaptive control of combination of preamble formats in 6G gNB and beyond. Features may be used to provide an idle mode UE which can estimate its approximate location in isolated cells. Features may be used to provide robust estimation procedure compared to estimation based on RSRP. Features may be used to provide a method which does not need additional hardware or UE support, such as with for sidelink/D2D communication for example.

In accordance with one example embodiment, an apparatus is provided comprising: at least one processor; and at least one memory storing instructions that, when executed with the at least one processor, cause the apparatus to perform: determining information regarding physical layer signals to be transmitted from a user equipment; receiving, by the apparatus, the physical layer signals transmitted from the user equipment; and determining by the apparatus, based upon the determined information and the receipt of the physical layer signals, a timing advance for the apparatus to use for sending signals to a network equipment.

The receiving of the physical layer signals may occur without transmitting in an uplink to the network equipment. The instructions, when executed with the at least one processor, may cause the apparatus to perform: receiving symbol information from the network equipment, where the symbol information is configured to be used with the apparatus for demodulating the physical layer signals received from the user equipment. The symbol information may comprise downlink control information in a common search space from the network equipment. The symbol information may comprise information regarding the physical layer signals to be transmitted from the user equipment. The symbol information may comprise a system information block. The physical layer signals may comprise a sounding reference signal transmitted from the user equipment. The determining of the information regarding the physical layer signals to be transmitted from the user equipment may comprise use of parameters configured to decode the physical layer signals, wherein the parameters indicate at least a location of the physical layer signals in time and frequency domain. The determining of the information regarding physical layer signals to be transmitted from the user equipment may comprise receiving a broadcast signaling from the network equipment, where the broadcast signaling comprises information configured for the apparatus to decode a sounding reference signal transmitted from the user equipment. The broadcast signaling may comprise at least one of: a threshold reference signal received power, or a number denoting a minimum number of timing advance measurements available for the apparatus to estimate its timing advance. The determining of the information regarding physical layer signals to be transmitted from the user equipment may comprise receiving timing advance downlink control information from the network equipment, where the timing advance downlink control information is configured to inform the apparatus, in a base-station beam of the network equipment, that a sounding reference signal transmission will take place from the user equipment which can be used for timing advance measurements. The apparatus may be in an idle mode. The determining of the information may comprise receiving symbol information from the network equipment, and where the instructions, when executed with the at least one processor, cause the apparatus to perform: switching between a first timing advance mode and a different timing advance mode based, at least partially, on the symbol information received from the network equipment and the physical layer signals received from the user equipment. The receiving of the physical layer signals may comprise receiving of physical layer signals from a plurality of user equipment, and where the instructions, when executed with the at least one processor, cause the apparatus to perform: selecting, based on parameters received by the apparatus from the network equipment, the physical layer signals to be used from the one or more of the plurality of user equipment for the determining of the timing advance. The receiving of the physical layer signals may comprise receiving of physical layer signals from a plurality of user equipment, and the determining of the timing advance may comprise: determining a respective timing advance measurement for the plurality of user equipment, and determining the timing advance based on parameters received by the apparatus from the network equipment and based on the determined timing advance measurements. The determining of the timing advance may be: without explicit knowledge or implicit knowledge of a position of the apparatus, without using multiple network equipment, without establishing a link with the user equipment, without receiving timing advance information from the user equipment, and without using a stored timing advance as the timing advance.

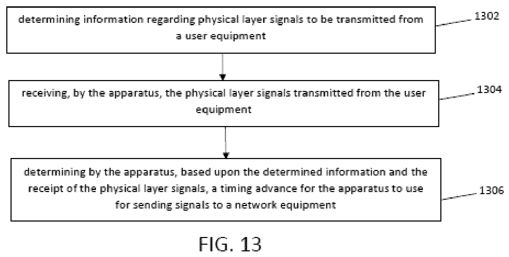

Referring also to Fig. 13, in accordance with one example embodiment, an example method may be provided comprising: determining, by an apparatus, information regarding physical layer signals to be transmitted from a user equipment as illustrated with block 1302; receiving, by the apparatus, the physical layer signals transmitted from the user equipment as illustrated with block 1304; and determining by the apparatus, based upon the determined information and the receipt of the physical layer signals, a timing advance for the apparatus to use for sending signals to a network equipment as illustrated with block 1306. The receiving of the physical layer signals may occur without transmitting in an uplink to the network equipment. The method may comprise receiving symbol information from the network equipment, where the symbol information is configured to be used with the apparatus for demodulating the physical layer signals received from the user equipment. The symbol information may comprise downlink control information in a common search space from the network equipment. The symbol information may comprise information regarding the physical layer signals to be transmitted from the user equipment. The symbol information may comprise a system information block. The physical layer signals may comprise a sounding reference signal transmitted from the user equipment. The determining of the information regarding the physical layer signals to be transmitted from the user equipment may comprise use of parameters configured to decode the physical layer signals, wherein the parameters indicate at least a location of the physical layer signals in time and frequency domain. The determining of the information regarding physical layer signals to be transmitted from the user equipment may comprise receiving a broadcast signaling from the network equipment, where the broadcast signaling comprises information configured for the apparatus to decode a sounding reference signal transmitted from the user equipment. The broadcast signaling may comprise at least one of: a threshold reference signal received power, or a number denoting a minimum number of timing advance measurements available for the apparatus to estimate its timing advance. The determining of the information regarding physical layer signals to be transmitted from the user equipment may comprise receiving timing advance downlink control information from the network equipment, where the timing advance downlink control information is configured to inform the apparatus, in a base-station beam of the network equipment, that a sounding reference signal transmission will take place from the user equipment which can be used for timing advance measurements. The apparatus may be in an idle mode. The determining of the information may comprise receiving symbol information from the network equipment, and further comprising: switching between a first timing advance mode and a different timing advance mode based, at least partially, on the symbol information received from the network equipment and the physical layer signals received from the user equipment. The receiving of the physical layer signals may comprise receiving of physical layer signals from a plurality of user equipment, and further comprising: selecting, based on parameters received by the apparatus from the network equipment, the physical layer signals to be used from the one or more of the plurality of user equipment for the determining of the timing advance. The receiving of the physical layer signals may comprise receiving of physical layer signals from a plurality of user equipment, and the determining of the timing advance may comprise: determining a respective timing advance measurement for the plurality of user equipment, and determining the timing advance based on parameters received by the apparatus from the network equipment and based on the determined timing advance measurements. The determining of the timing advance may be: without explicit knowledge or implicit knowledge of a position of the apparatus, without using multiple network equipment, without establishing a link with the user equipment, without receiving timing advance information from the user equipment, and without using a stored timing advance as the timing advance.

In accordance with one example embodiment, an apparatus comprising: means for determining information regarding physical layer signals to be transmitted from a user equipment; means for receiving the physical layer signals transmitted from the user equipment; and means for determining, based upon the determined information and the receipt of the physical layer signals, a timing advance for the apparatus to use for sending signals to a network equipment.

In accordance with one example embodiment, a program storage device may be provided readable by an apparatus, tangibly embodying a program of instructions executable with the apparatus for performing operations, the operations comprising: determining information regarding physical layer signals to be transmitted from a user equipment; receiving the physical layer signals transmitted from the user equipment; and determining, based upon the determined information and the receipt of the physical layer signals, a timing advance for the apparatus to use for sending signals to a network equipment.

**In** accordance with one example embodiment, an apparatus is provided comprising: at least one processor; and at least one memory storing instructions that, when executed with the at least one processor, cause the apparatus to perform: determining information related to physical layer signals to be received by the apparatus, where the physical layer signals are to be sent from a first user equipment to the apparatus; and transmitting the information by the apparatus to a second user equipment, where the information is at least partially configured for the second user equipment to use for demodulating the physical layer signals sent from the first user equipment and received at the second user equipment.

The information may be configured for the first user equipment to use to send the physical layer signals. The physical layer signals may comprise sounding reference signals. The transmitting of the information to the second user equipment may comprise broadcast signaling of the information in a beam from the apparatus. The information may comprise parameters for the second user equipment to demodulate the transmitted sounding reference signals. The instructions, when executed with the at least one processor, may cause the apparatus to perform: transmitting of a timing advance downlink control information to the second user equipment in a common search space in a beam from the apparatus. The information transmitted by the apparatus may comprise parameters configured to decode the physical layer signals, wherein the parameters indicate at least a location of the physical layer signals in time and frequency domain. The information may comprise symbol information in a system information block. The system information block may comprise at least one of: a threshold reference signal received power, or a number denoting a minimum number of timing advance measurements available for the second user equipment to estimate its timing advance. The system information block may comprise information configured for the second user equipment to use to control maximum timing advance estimation error. The system information block may comprise parameters configured for the second user equipment to select one or more determined respective timing advances, from respective ones of a plurality of first user equipments, for sending signals to the apparatus with a timing advance. The instructions, when executed with the at least one processor, may cause the apparatus to perform: transmitting information regarding switching, at the second user equipment, between a first timing advance mode and a different timing advance mode based, at least partially, on the physical layer signals received at the second user equipment from the first user equipment. The transmitting of the information may be configured to be received at the second user equipment while the second user equipment is in an idle mode. The determining information related to physical layer signals may comprise selecting the first user equipment from a plurality of user equipment based, at least partially, upon: the first user equipment being in a connected state with the apparatus; and proximity of the first user equipment relative to a cell edge of a beam from the apparatus. The instructions, when executed with the at least one processor, may cause the apparatus to perform: determining a bounded estimation error. The instructions, when executed with the at least one processor, may cause the apparatus to perform: scheduling transmissions for a symbol of a sounding reference signals for a first one of the plurality of user equipment and a symbol adjacent to the sounding reference signals are from at least one second one of the plurality of user equipment, which is in a beam from the apparatus, that is not adjacent to the beam in which the first user equipment is located. The instructions, when executed with the at least one processor, may cause the apparatus to perform: determining that at least one of the plurality of user equipment is at least one of: stationary, or a fixed wireless access user equipment.

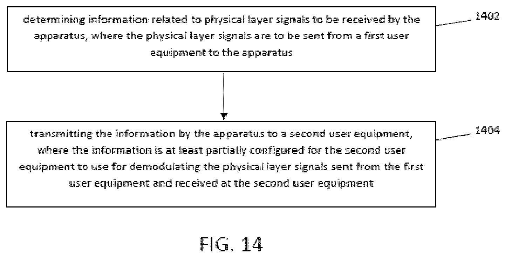

Referring also to Fig. 14, in accordance with one example embodiment, a method may be provided comprising: determining information related to physical layer signals to be received by an apparatus as illustrated with block 1402, where the physical layer signals are to be sent from a first user equipment to the apparatus; and transmitting the information by the apparatus to a second user equipment as illustrated with block 1404, where the information is at least partially configured for the second user equipment to use for demodulating the physical layer signals sent from the first user equipment and received at the second user equipment. The information may be configured for the first user equipment to use to send the physical layer signals. The physical layer signals may comprise sounding reference signals. The transmitting of the information to the second user equipment may comprise broadcast signaling of the information in a beam from the apparatus. The method may comprise transmitting of a timing advance downlink control information to the second user equipment in a common search space in a beam from the apparatus. The information may comprise parameters for the second user equipment to demodulate the transmitted sounding reference signals. The information may comprise parameters configured to decode the physical layer signals, wherein the parameters indicate at least a location of the physical layer signals in time and frequency domain. The information may comprise symbol information in a system information block. The system information block may comprise at least one of: a threshold reference signal received power, or a number denoting a minimum number of timing advance measurements available for the second user equipment to estimate its timing advance. The system information block may comprise information configured for the second user equipment to use to control maximum timing advance estimation error. The system information block may comprise parameters configured for the second user equipment to select one or more determined respective timing advances, from respective ones of a plurality of first user equipments, for sending signals to the apparatus with a timing advance. After processing multiple TA measurements, a single TA estimate may obtained. So, there may be just one final TA estimate which is used to send signals to the network with timing advance. The method may comprise transmitting information regarding switching, at the second user equipment, between a first timing advance mode and a different timing advance mode based, at least partially, on the physical layer signals received at the second user equipment from the first user equipment. The transmitting of the information may be configured to be received at the second user equipment while the second user equipment is in an idle mode. The determining information related to physical layer signals may comprise selecting the first user equipment from a plurality of user equipment based, at least partially, upon: the first user equipment being in a connected state with the apparatus; and proximity of the first user equipment relative to a cell edge of a beam from the apparatus. The method may comprise determining a bounded estimation error. The method may comprise scheduling transmissions for a symbol of a sounding reference signals for a first one of the plurality of user equipment and a symbol adjacent to the sounding reference signals are from at least one second one of the plurality of user equipment, which is in a beam from the apparatus, that is not adjacent to the beam in which the first user equipment is located. The method may comprise determining that at least one of the plurality of user equipment is at least one of: stationary, or a fixed wireless access user equipment.

In accordance with one example embodiment, an apparatus comprising: means for determining information related to physical layer signals to be received by the apparatus, where the physical layer signals are to be sent from a first user equipment to the apparatus; and means for transmitting the information by the apparatus to a second user equipment, where the information is at least partially configured for the second user equipment to use for demodulating the physical layer signals sent from the first user equipment and received at the second user equipment.

In accordance with one example embodiment, with a program storage device readable by an apparatus, tangibly embodying a program of instructions executable with the apparatus for performing operations, the operations comprising: determining information related to physical layer signals to be received by the apparatus, where the physical layer signals are to be sent from a first user equipment to the apparatus; and transmitting the information by the apparatus to a second user equipment, where the information is at least partially configured for the second user equipment to use for demodulating the physical layer signals sent from the first user equipment and received at the second user equipment.

In accordance with one example embodiment, an apparatus is provided comprising: at least one processor; and at least one memory storing instructions that, when executed with the at least one processor, may cause the apparatus to perform: receiving physical layer signals from a plurality of user equipment; determining respective timing advance measurements based, at least partially, on the received physical layer signals; and selecting, based at least partially on one or more parameters, at least one of the respective timing advance measurements to use for determining a timing advance for the apparatus to use for sending signals to a network equipment.

The physical layer signals may comprise sounding reference signals. The apparatus may be in an idle mode. The instructions, when executed with the at least one processor, may cause the apparatus to perform: receiving symbol information from the network equipment regarding the physical layer signals from the plurality of user equipment. The receiving of the symbol information from the network equipment may be with a downlink control information from the network equipment. The instructions, when executed with the at least one processor, may cause the apparatus to perform: receiving a system information block from the network equipment comprising the one or more parameters. The parameters may comprise at least one of: a threshold reference signal received power, or a number denoting a minimum number of timing advance measurements available for the apparatus to estimate its timing advance. The selecting may comprise filtering the respective timing advance measurements to use based upon at least one of: determining that the physical layer signals and network equipment signals are received in generally opposite beams, or determining that the user equipment is located close to the apparatus based on at least a received power of the physical layer signals. The instructions, when executed with the at least one processor, may cause the apparatus to perform: demodulating the received physical layer signals based on information received from the network equipment, where the information at least partially comprises the one or more parameters. The information may comprise sounding reference signal information regarding the physical layer signals from the plurality of user equipment. The apparatus may be configured to receive the physical layer signals from the plurality of user equipment in at least one first receive beam and receive signals from the network equipment in a different second receive beam, and configured to determine that the first and second receive beams are generally opposite, and where the selecting is based upon the determination that the first and second receive beam are generally opposite. The instructions, when executed with the at least one processor, may cause the apparatus to perform: switching between a first timing advance mode and a second timing advance mode based on the physical layer signals from one or more of the plurality of user equipment. The first timing advance mode may be based on a bounded estimation error.

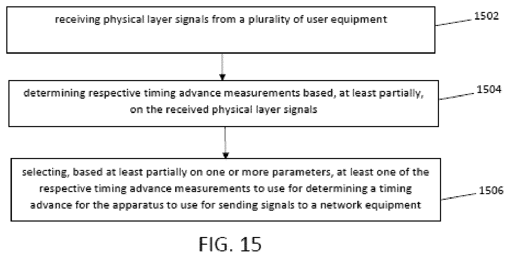

Referring also to Fig. 15, in accordance with one example embodiment, a method is provided comprising: receiving physical layer signals from a plurality of user equipment as illustrated with block 1502; determining respective timing advance measurements based, at least partially, on the received physical layer signals as illustrated with block 1504; and selecting, based at least partially on one or more parameters, at least one of the respective timing advance measurements to use for determining a timing advance to use for sending signals to a network equipment as illustrated with block 1506. The physical layer signals may comprise sounding reference signals. The method may comprise performing the selecting by an apparatus while the apparatus is in an idle mode. The method may comprise receiving symbol information from the network equipment regarding the physical layer signals from the plurality of user equipment. The receiving of the symbol information from the network equipment may be with a downlink control information from the network equipment. The method may comprise receiving a system information block from the network equipment comprising the one or more parameters. The parameters may comprise at least one of: a threshold reference signal received power, or a number denoting a minimum number of timing advance measurements available for an apparatus to estimate its timing advance. The selecting may comprise filtering the respective timing advance measurements to use based upon at least one of: determining that the physical layer signals and network equipment signals are received in generally opposite beams, or determining that the user equipment is located close to an apparatus based on at least a received power of the physical layer signals. The method may comprise demodulating the received physical layer signals based on information received from the network equipment, where the information at least partially comprises the one or more parameters. The information may comprise sounding reference signal information regarding the physical layer signals from the plurality of user equipment. The method may comprise receiving the physical layer signals from the plurality of user equipment in at least one first receive beam and receive signals from the network equipment in a different second receive beam, and determining that the first and second receive beams are generally opposite, and where the selecting is based upon the determination that the first and second receive beam are generally opposite. The method may comprise switching between a first timing advance mode and a second timing advance mode based on the physical layer signals from one or more of the plurality of user equipment. The first timing advance mode may be based on a bounded estimation error.

In accordance with one example embodiment, an apparatus is provided comprising: means for receiving physical layer signals from a plurality of user equipment; means for determining respective timing advance measurements based, at least partially, on the received physical layer signals; and means for selecting, based at least partially on one or more parameters, at least one of the respective timing advance measurements to use for determining a timing advance to use for sending signals to a network equipment.

In accordance with one example embodiment, a program storage device is provided readable by an apparatus, tangibly embodying a program of instructions executable with the apparatus for performing operations, the operations comprising: receiving physical layer signals from a plurality of user equipment; determining respective timing advance measurements based, at least partially, on the received physical layer signals; and selecting, based at least partially on one or more parameters, at least one of the respective timing advance measurements to use for determining a timing advance to use for sending signals to a network equipment.

**In** accordance with one example embodiment, an apparatus is provided comprising: at least one processor; and at least one memory storing instructions that, when executed with the at least one processor, cause the apparatus to perform: determining a first timing advance mode for sending signals from the apparatus to a network equipment; determining a second timing advance mode for sending signals from the apparatus to the network equipment; and switching between the first timing advance mode and the second timing advance mode based at least partially on a physical layer signal from one or more user equipment.

The first timing advance mode may comprise a timing advancement mode configured to be performed while the apparatus is in an idle mode. The second timing advance mode may comprise a timing advancement mode configured to be performed while the apparatus is not in an idle mode. The switching may be based, at least partially, on information, received from the network equipment, regarding the physical layer signal. The information, received from the network equipment, regarding the physical layer signal may be received in a system information block from the network equipment. The information, received from the network equipment, regarding the physical layer signal may comprise information related to a sounding reference signal from the one or more user equipment. The switching may be based, at least partially, on information, received from the network equipment, regarding transmission scheduling of the physical layer signal from the one or more user equipment. The switching may be based, at least partially, on information regarding at least one of: a threshold reference signal received power, or a number denoting a minimum number of timing advance measurements available for the apparatus to estimate its timing advance. The switching may be based, at least partially, on determination of a first direction of signals from the network equipment versus at least one second direction of the physical layer signal from the one or more user equipment.

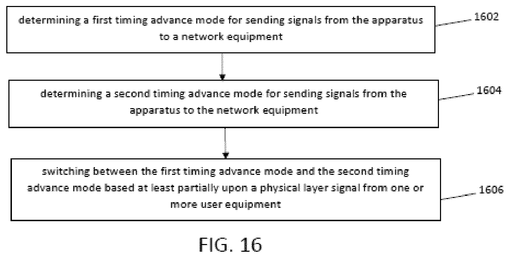

Referring also to Fig. 16, in accordance with one example embodiment, a method is provided comprising: determining a first timing advance mode for sending signals from an apparatus to a network equipment as illustrated with block 1602; determining a second timing advance mode for sending signals from the apparatus to the network equipment as illustrated with block 1604; and switching between the first timing advance mode and the second timing advance mode based at least partially on a physical layer signal from one or more user equipment as illustrated with block 1606. The first timing advance mode may comprise a timing advancement mode configured to be performed while the apparatus is in an idle mode. The second timing advance mode may comprise a timing advancement mode configured to be performed while the apparatus is not in an idle mode. The switching may be based, at least partially, on information, received from the network equipment, regarding the physical layer signal. The information, received from the network equipment, regarding the physical layer signal may be received in a system information block from the network equipment. The information, received from the network equipment, regarding the physical layer signal may comprise information related to a sounding reference signal from the one or more user equipment. The switching may be based, at least partially, on information, received from the network equipment, regarding transmission scheduling of the physical layer signal from the one or more user equipment. The switching may be based, at least partially, on information regarding at least one of: a threshold reference signal received power, or a number denoting a minimum number of timing advance measurements available for the apparatus to estimate its timing advance. The switching may be based, at least partially, on determination of a first direction of signals from the network equipment versus at least one second direction of the physical layer signal from the one or more user equipment.

In accordance with one example embodiment, an apparatus is provided comprising: means for determining a first timing advance mode for sending signals from the apparatus to a network equipment; means for determining a second timing advance mode for sending signals from the apparatus to the network equipment; and means for switching between the first timing advance mode and the second timing advance mode based at least partially on a physical layer signal from one or more user equipment.

In accordance with one example embodiment, a program storage device is provided readable by an apparatus, tangibly embodying a program of instructions executable with the apparatus for performing operations, the operations comprising: determining a first timing advance mode for sending signals from the apparatus to a network equipment; determining a second timing advance mode for sending signals from the apparatus to the network equipment; and switching between the first timing advance mode and the second timing advance mode based at least partially on a physical layer signal from one or more user equipment.

In accordance with an example embodiment, an apparatus is provided comprising: at least one processor; and at least one memory storing instructions that, when executed with the at least one processor, cause the apparatus to perform: transmitting first information by the apparatus to a first user equipment, where the first information is at least partially configured for the first user equipment to use for demodulating physical layer signals sent from a second user equipment and received at the first user equipment; and transmitting second information by the apparatus to the first user equipment, where the second information comprises symbol information related to the physical layer signals. The second information may comprise timing advance downlink control information in a common search space from the network equipment. The first information may comprise a system information block. The instructions, when executed with the at least one processor, may cause the apparatus to perform: scheduling transmissions for a symbol of a sounding reference signals for the second user equipment and a symbol adjacent to the sounding reference signals are from another user equipment, which is in a beam from the apparatus, that is not adjacent to the beam in which the first user equipment is located. The instructions, when executed with the at least one processor, may cause the apparatus to perform: selecting a second user equipment that is one of: stationary, or slow moving, or a fixed wireless access user equipment. The apparatus may determine a bounded estimation error and configure the first timing advance mode based on the determined bounded estimation error.

### Some arrangements are described further in the following numbered paragraphs:

1. An apparatus comprising:
   at least one processor; and
   at least one memory storing instructions that, when executed with the at least one processor, cause the apparatus to perform:
   determining information regarding physical layer signals to be transmitted from a user equipment;
   receiving, by the apparatus, the physical layer signals transmitted from the user equipment; and
   determining by the apparatus, based upon the determined information and the receipt of the physical layer signals, a timing advance for the apparatus to use for sending signals to a network equipment.
2. The apparatus of paragraph 1 where the receiving of the physical layer signals occurs without transmitting in an uplink to the network equipment.
3. The apparatus of paragraph 1-2 where the instructions, when executed with the at least one processor, cause the apparatus to perform:
   receiving symbol information from the network equipment, where the symbol information is configured to be used with the apparatus for demodulating the physical layer signals received from the user equipment.
4. The apparatus of paragraph 3 where the symbol information comprises downlink control information in a common search space from the network equipment.
5. The apparatus of paragraph 3-4 where the symbol information comprises information regarding the physical layer signals to be transmitted from the user equipment.
6. The apparatus of paragraph 3-5 where the symbol information comprises a system information block.
7. The apparatus of paragraph 1-6 where the physical layer signals comprise at least one of a sounding reference signal or a demodulation reference signal transmitted from the user equipment.
8. The apparatus of paragraph 1-7 where the determining of the information regarding the physical layer signals to be transmitted from the user equipment comprises use of parameters configured to decode the physical layer signals, wherein the parameters indicate at least a location of the physical layer signals in time and frequency domain.
9. The apparatus of paragraph 8 where the determining of the information regarding physical layer signals to be transmitted from the user equipment comprises receiving a broadcast signaling from the network equipment, where the broadcast signaling comprises information configured for the apparatus to decode a sounding reference signal transmitted from the user equipment.
10. The apparatus of paragraph 9 where the broadcast signaling comprises at least one of:
   a threshold reference signal received power, or
   a number denoting a minimum number of timing advance measurements available for the apparatus to estimate its timing advance.
11. The apparatus of paragraph 1-10 where the determining of the information regarding physical layer signals to be transmitted from the user equipment comprises receiving timing advance downlink control information from the network equipment, where the timing advance downlink control information is configured to inform the apparatus, in a base-station beam of the network equipment, that a sounding reference signal transmission will take place from the user equipment which can be used for timing advance measurements.
12. The apparatus of paragraph 1-11 where the apparatus is in an idle mode.
13. The apparatus of paragraph 1-12 where the determining of the information comprises receiving symbol information from the network equipment, and where the instructions, when executed with the at least one processor, cause the apparatus to perform: switching between a first timing advance mode and a different timing advance mode based, at least partially, on the symbol information received from the network equipment and the physical layer signals received from the user equipment.
14. The apparatus of paragraph 1-13 where the receiving of the physical layer signals comprises receiving of physical layer signals from a plurality of user equipment, and where the instructions, when executed with the at least one processor, cause the apparatus to perform:
   selecting, based on parameters received by the apparatus from the network equipment, the physical layer signals to be used from the one or more of the plurality of user equipment for the determining of the timing advance.
15. The apparatus of paragraph 1-13 where:
   the receiving of the physical layer signals comprises receiving of physical layer signals from a plurality of user equipment, and
   the determining of the timing advance comprises:
   determining a respective timing advance measurement for the plurality of user equipment, and
   determining the timing advance based on parameters received by the apparatus from the network equipment and based on the determined timing advance measurements.
16. The apparatus of paragraph 1-15 where the determining of the timing advance is:
   without explicit knowledge or implicit knowledge of a position of the apparatus,
   without using multiple network equipment,
   without establishing a link with the user equipment,
   without receiving timing advance information from the user equipment, and
   without using a stored timing advance as the timing advance.
17. A method comprising:
   determining, by an apparatus, information regarding physical layer signals to be transmitted from a user equipment;
   receiving, by the apparatus, the physical layer signals transmitted from the user equipment; and
   determining by the apparatus, based upon the determined information and the receipt of the physical layer signals, a timing advance for the apparatus to use for sending signals to a network equipment.
18. An apparatus comprising:
   at least one processor; and
   at least one memory storing instructions that, when executed with the at least one processor, cause the apparatus to perform:
   determining information related to physical layer signals to be received by the apparatus, where the physical layer signals are to be sent from a first user equipment to the apparatus; and
   transmitting the information by the apparatus to a second user equipment, where the information is at least partially configured for the second user equipment to use for demodulating the physical layer signals sent from the first user equipment and received at the second user equipment.
19. The apparatus of paragraph 18 where the information is configured for the first user equipment to use to send the physical layer signals.
20. The apparatus of paragraph 18-19 where the physical layer signals comprise sounding reference signals.
21. The apparatus of paragraph 18-20 where the transmitting of the information to the second user equipment comprises broadcast signaling of the information in a beam from the apparatus.
22. The apparatus of paragraph 18-21 where the information comprises parameters for the second user equipment to demodulate the transmitted sounding reference signals.
23. The apparatus of paragraph 18-22 where the instructions, when executed with the at least one processor, cause the apparatus to perform:
   transmitting of a timing advance downlink control information to the second user equipment in a common search space in a beam from the apparatus.
24. The apparatus of paragraph 18-23 where the information transmitted by the apparatus comprises parameters configured to decode the physical layer signals, wherein the parameters indicate at least a location of the physical layer signals in time and frequency domain.
25. The apparatus of paragraph 18-24 where the information comprises symbol information in a system information block.
26.The apparatus of paragraph 25 where the system information block comprises at least one of:
   a threshold reference signal received power, or
   a number denoting a minimum number of timing advance measurements available for the second user equipment to estimate its timing advance.
27. The apparatus of paragraph 25 where the system information block comprises information configured for the second user equipment to use to control maximum timing advance estimation error.
28. The apparatus of paragraph 25-27 where the system information block comprises parameters configured for the second user equipment to select one or more determined respective timing advances, from respective ones of a plurality of first user equipments, for sending signals to the apparatus with a timing advance.
29. The apparatus of paragraph 18-28 where the instructions, when executed with the at least one processor, cause the apparatus to perform:
   transmitting information regarding switching, at the second user equipment, between a first timing advance mode and a different timing advance mode based, at least partially, on the physical layer signals received at the second user equipment from the first user equipment.
30. The apparatus of paragraph 18-28 where the transmitting of the information is configured to be received at the second user equipment while the second user equipment is in an idle mode.
31. The apparatus of paragraph 18-30 where the determining information related to physical layer signals comprises selecting the first user equipment from a plurality of user equipment based, at least partially, upon:
   the first user equipment being in a connected state with the apparatus; and
   proximity of the first user equipment relative to a cell edge of a beam from the apparatus.
32. The apparatus of paragraph 18-31 where the instructions, when executed with the
   at least one processor, cause the apparatus to perform:
   determining a bounded estimation error.
33. The apparatus of paragraph 18-32 where the instructions, when executed with the at least one processor, cause the apparatus to perform:
   scheduling transmissions for a symbol of a sounding reference signals for a first one of the plurality of user equipment and a symbol adjacent to the sounding reference signals are from at least one second one of the plurality of user equipment, which is in a beam from the apparatus, that is not adjacent to the beam in which the first user equipment is located.
34. The apparatus of paragraph 18-33 where the instructions, when executed with the at least one processor, cause the apparatus to perform:
   determining that at least one of the plurality of user equipment is at least one of:
   stationary, or
   a fixed wireless access user equipment.
35. A method comprising:
   determining information related to physical layer signals to be received by an apparatus, where the physical layer signals are to be sent from a first user equipment to the apparatus; and
   transmitting the information by the apparatus to a second user equipment, where the information is at least partially configured for the second user equipment to use for demodulating the physical layer signals sent from the first user equipment and received at the second user equipment.

The term "non-transitory," as used herein, is a limitation of the medium itself (i.e., tangible, not a signal) as opposed to a limitation on data storage persistency (e.g., RAM vs. ROM).

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
   (iii) hardware circuit(s) and or processor(s), such as a microprocessor(s) or a portion of a microprocessor(s), that requires software (e.g., firmware) for operation, but the software may not be present when it is not needed for operation."

definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modifications and variances which fall within the scope of the appended claims.

## Claims

1. An apparatus comprising:
means for determining information regarding physical layer signals to be transmitted from a user equipment;
means for receiving the physical layer signals transmitted from the user equipment; and
means for determining, based upon the determined information and the receipt of the physical layer signals, a timing advance for the apparatus to use for sending signals to a network equipment.

2. The apparatus as claimed in claim 1 where the receiving of the physical layer signals occurs without transmitting in an uplink to the network equipment.

3. The apparatus as claimed in any one of claims 1-2, further comprising:
means for receiving symbol information from the network equipment, where the symbol information is configured to be used with the apparatus for demodulating the physical layer signals received from the user equipment.

4. The apparatus as claimed in claim 3 where the symbol information comprises downlink control information in a common search space from the network equipment.

5. The apparatus as claimed in any one of claims 3-4 where the symbol information comprises information regarding the physical layer signals to be transmitted from the user equipment.

6. The apparatus as claimed in any one of claims 3-5 where the symbol information comprises a system information block.

7. The apparatus as claimed in any one of claims 1-6 where the physical layer signals comprise at least one of a sounding reference signal or a demodulation reference signal transmitted from the user equipment.

8. The apparatus as claimed in any one of claims 1-7 where the means for determining the information regarding the physical layer signals to be transmitted from the user equipment comprises means for use of parameters configured to decode the physical layer signals, wherein the parameters indicate at least a location of the physical layer signals in time and frequency domain.

9. The apparatus as claimed in claim 8 where the means for determining the information regarding physical layer signals to be transmitted from the user equipment comprises means for receiving a broadcast signaling from the network equipment, where the broadcast signaling comprises information configured for the apparatus to decode a sounding reference signal transmitted from the user equipment.

10. The apparatus as claimed in claim 9 where the broadcast signaling comprises at least one of:
a threshold reference signal received power, or
a number denoting a minimum number of timing advance measurements available for the apparatus to estimate its timing advance.

11. The apparatus as claimed in any one of claims 1-10 where the means for determining the information regarding physical layer signals to be transmitted from the user equipment comprises means for receiving timing advance downlink control information from the network equipment, where the timing advance downlink control information is configured to inform the apparatus, in a base-station beam of the network equipment, that a sounding reference signal transmission will take place from the user equipment which can be used for timing advance measurements.

12. The apparatus as claimed in any one of claims 1-11 where the apparatus is in an idle mode.

13. The apparatus as claimed in any one of claims 1-12, where the means for determining the information comprises means for receiving symbol information from the network equipment, and the apparatus further comprises:
means for switching between a first timing advance mode and a different timing advance mode based, at least partially, on the symbol information received from the network equipment and the physical layer signals received from the user equipment.

14. The apparatus as claimed in any one of claims 1-13 where the means for receiving the physical layer signals comprises receiving physical layer signals from a plurality of user equipment, and the apparatus further comprises:
means for selecting, based on parameters received by the apparatus from the network equipment, the physical layer signals to be used from the one or more of the plurality of user equipment for the determining of the timing advance.

15. A method comprising:
determining, by an apparatus, information regarding physical layer signals to be transmitted from a user equipment;
receiving, by the apparatus, the physical layer signals transmitted from the user equipment; and
determining by the apparatus, based upon the determined information and the receipt of the physical layer signals, a timing advance for the apparatus to use for sending signals to a network equipment.
